# EUROPÄISCHE PATENTSCHRIFT

(11) **EP 4 493 414 B1**
(45) Veröffentlichungstag und Bekanntmachung des Hinweises auf die Patenterteilung: **24.12.2025**
(21) Anmeldenummer: 23719270.3
(22) Anmeldetag: 07.02.2023
(51) Int. Cl.: B42D 25/48, B41M 3/14, G01N 21/65, G01N 21/17, B42D 25/36, G01N 21/31, G01N 21/64, G01N 21/84, G01N 21/94

(54) **VERFAHREN ZUR HERSTELLUNG VON WERTDOKUMENTEN UND SENSORSYSTEM ZUR QUALITÄTSPRÜFUNG BEI DER HERSTELLUNG VON WERTDOKUMENTEN**
METHOD FOR PRODUCING VALUE DOCUMENTS, AND SENSOR SYSTEM FOR QUALITY CONTROL DURING THE PRODUCTION OF VALUE DOCUMENTS
PROCÉDÉ DE FABRICATION DE DOCUMENTS DE VALEUR ET SYSTÈME CAPTEUR SERVANT AU CONTRÔLE DE LA QUALITÉ LORS DE LA FABRICATION DE DOCUMENTS DE VALEUR

(30) Priorität: 17.03.2022 DE 102022000932
(43) Veröffentlichungstag der Anmeldung: 22.01.2025
(73) Patentinhaber: Giesecke+Devrient Currency Technology GmbH, 81677 München (DE)
(72) Erfinder: GIERING, Thomas, 85614 Kirchseeon (DE); HAPP, Thomas, 81825 München (DE)
(74) Vertreter: Giesecke+Devrient IP
(86) Internationale Anmeldenummer: PCT/DE2023/100095
(87) Internationale Veröffentlichungsnummer: WO 2023/174469

(56) Entgegenhaltungen:
- EP-A2- 3 825 141
- WO-A1-03/032243
- WO-A1-2019/101267
- WO-A1-2020/052812
- DE-A1- 102011 122 246
- DE-A1- 102016 213 111
- DE-A1- 102019 118 000
- US-A- 5 502 304

## Beschreibung

Die Erfindung betrifft ein Verfahren zur Herstellung von Wertdokumenten, insbesondere Banknoten, sowie ein Sensorsystem zur Qualitätsprüfung bei der Herstellung von Wertdokumenten.

Zur Absicherung von Wertdokumenten und zu deren Echtheitsprüfung bzw. Klassifizierung ist es bekannt, maschinell prüfbare Sicherheitsmerkmale in die Wertdokumente ein- bzw. auf diese aufzubringen. Im Falle einer optischen Echtheitsprüfung bzw. Klassifizierung wird das Wertdokument von einem Sensor mit Licht bestrahlt, und das vom Wertdokument emittierte, remittierte oder transmittierte Licht detektiert und analysiert, um das Merkmal zu prüfen bzw. das Wertdokument einer Klasse zuzuordnen.

Bei der Herstellung solcher Wertdokumente ist in der Regel eine Qualitätskontrolle vorgesehen, um sicherzustellen, dass die fertigen Wertdokumente das Merkmal in einer vorbestimmten Menge und/oder mit vorbestimmten Eigenschaften enthalten. Zu diesem Zweck kann vorgesehen sein, die Wertdokumente zumindest stichprobenartig zu prüfen und nur dann als umlauffähig freizugeben, wenn diese vorgegebene Kriterien erfüllen, wohingegen alle anderen Wertdokumente als Ausschuss aussortiert und gegebenenfalls vernichtet werden. Im Sinne eines umfassenden Fälschungsschutzes sollte dabei möglichst vermieden werden, die am fertigen Wertdokument geprüften Eigenschaften bzw. deren Referenzwerte einem breiten Personenkreis zugänglich zu machen.

Beispiele für konventionelle Verfahren und Systeme zur Qualitätsprüfung sind in DE102019118000-A1, DE102016213111-A1 sowie WO-03032243-A1 beschrieben.

Es ist eine Aufgabe der Erfindung, ein Verfahren zur Herstellung von Wertdokumenten sowie ein Sensorsystem zur Qualitätsprüfung bei der Herstellung von Wertdokumenten anzugeben, bei welchem bzw. durch welches auf einfache Weise eine effiziente Herstellung und sichere Qualitätsprüfung von Wertdokumenten ermöglicht und insbesondere der Materialausschuss reduziert wird.

Diese Aufgabe wird durch ein Verfahren zur Herstellung von Wertdokumenten und ein Sensorsystem zur Qualitätsprüfung bei der Herstellung von Wertdokumenten gemäß den unabhängigen Ansprüchen 1 und 12 gelöst.

Ein Verfahren zur Herstellung von Wertdokumenten, insbesondere Banknoten, gemäß einem ersten Aspekt der vorliegenden Offenbarung weist folgende Schritte auf: Bereitstellen mindestens eines ersten Halbzeugs; Erfassen einer vom ersten Halbzeug ausgehenden ersten optischen Strahlung mit mindestens einer ersten Empfindlichkeit und mindestens einer ersten Auflösung zeitlicher, räumlicher und/oder spektraler Eigenschaften der ersten optischen Strahlung und Prüfen der ersten optischen Strahlung anhand eines ersten Prüfkriteriums und, wenn das erste Prüfkriterium erfüllt ist, Einbringen und/oder Aufbringen mindestens eines Merkmalsstoffes in bzw. auf das erste Halbzeug, wobei ein Wertdokument oder ein zweites Halbzeug, welches zur Herstellung eines Wertdokuments verwendbar ist, erhalten wird; Erfassen einer vom Wertdokument bzw. zweiten Halbzeug ausgehenden zweiten optischen Strahlung mit mindestens einer zweiten Empfindlichkeit und mindestens einer zweiten Auflösung zeitlicher, räumlicher und/oder spektraler Eigenschaften der zweiten optischen Strahlung und Prüfen der zweiten optischen Strahlung anhand mindestens eines zweiten Prüfkriteriums und, wenn das mindestens eine zweite Prüfkriterium erfüllt ist, Freigeben des Wertdokuments für den Umlauf bzw. Freigeben des zweiten Halbzeugs zur Verwendung bei der Herstellung eines Wertdokuments. Dabei ist die erste Empfindlichkeit größer als die zweite Empfindlichkeit und/oder die erste Auflösung kleiner als die zweite Auflösung und/oder das Prüfen der ersten optischen Strahlung hinsichtlich der zeitlichen, räumlichen und/oder spektralen Eigenschaften der ersten optischen Strahlung weniger selektiv als das Prüfen der zweiten optischen Strahlung hinsichtlich der zeitlichen, räumlichen bzw. spektralen Eigenschaften der zweiten optischen Strahlung.

Ein zweiter Aspekt der vorliegenden Offenbarung betrifft ein Sensorsystem zur Qualitätsprüfung bei der Herstellung von Wertdokumenten, bei welcher in und/ oder auf ein erstes Halbzeug mindestens ein Merkmalsstoff eingebracht bzw. aufgebracht wird, um ein Wertdokument oder ein zweites Halbzeug, welches zur Herstellung eines Wertdokuments verwendbar ist, zu erhalten. Das Sensorsystem weist mindestens eine Erfassungsvorrichtung zur Erfassung von optischer Strahlung und mindestens eine Prüfvorrichtung zur Prüfung der erfassten optischen Strahlung auf und ist in einem ersten Betriebsmodus und in einem zweiten Betriebsmodus betreibbar. Im ersten Betriebsmodus, welcher im Zusammenhang mit der vorliegenden Offenbarung auch als "Cleanmode" bezeichnet wird, wird eine vom ersten Halbzeug ausgehende erste optische Strahlung durch die mindestens eine Erfassungsvorrichtung mit mindestens einer ersten Empfindlichkeit und mindestens einer ersten Auflösung zeitlicher, räumlicher und/oder spektraler Eigenschaften der ersten optischen Strahlung erfasst und von der mindestens einen Prüfvorrichtung anhand eines ersten Prüfkriteriums geprüft, wobei ein erstes Prüfsignal erzeugt und/oder ausgegeben wird, welches davon abhängig ist, ob das erste Prüfkriterium erfüllt ist. Im zweiten Betriebsmodus, welcher im Zusammenhang mit der vorliegenden Offenbarung auch als "Messmode" bezeichnet wird, wird eine vom Wertdokument bzw. vom zweiten Halbzeug ausgehende zweite optische Strahlung durch die mindestens eine Erfassungsvorrichtung mit mindestens einer zweiten Empfindlichkeit und mindestens einer zweiten Auflösung zeitlicher, räumlicher und/oder spektraler Eigenschaften der zweiten optischen Strahlung erfasst und von der mindestens einen Prüfvorrichtung anhand mindestens eines zweiten Prüfkriteriums geprüft, wobei ein zweites Prüfsignal erzeugt und/oder ausgegeben wird, welches davon abhängt, ob das mindestens eine zweite Prüfkriterium erfüllt ist. Dabei ist die erste Empfindlichkeit größer als die zweite Empfindlichkeit und/oder die erste Auflösung kleiner als die zweite Auflösung und/oder das Prüfen der ersten optischen Strahlung hinsichtlich der zeitlichen, räumlichen und/oder spektralen Eigenschaften der ersten optischen Strahlung weniger selektiv als das Prüfen der zweiten optischen Strahlung hinsichtlich der zeitlichen, räumlichen bzw. spektralen Eigenschaften der zweiten optischen Strahlung.

Aspekte der vorliegenden Offenbarung basieren vorzugsweise auf dem Ansatz, bei der Herstellung eines Wertdokuments mindestens ein erstes Halbzeug, insbesondere eine repräsentative Stichprobe eines ersten Halbzeugs, vor der Ein- bzw. Aufbringung des Merkmalsstoffes, welcher im Zusammenhang mit der vorliegenden Offenbarung auch als "Merkmal" oder "Sicherheitsmerkmal" bezeichnet wird, in bzw. auf das erste Halbzeug mit einem Sensor zu prüfen, um sicherzustellen, dass das erste Halbzeug keine die Messung von Merkmalseigenschaften störenden Verunreinigungen oder nur so viele Verunreinigungen enthält, dass diese die Messung der Merkmalseigenschaften am Endprodukt, insbesondere an einem unter Verwendung des ersten Halbzeugs hergestellten Wertdokument bzw. zweiten Halbzeug, nicht oder nicht signifikant stören. Dabei wird eine vom ersten Halbzeug ausgehende erste optische Strahlung, welche im Zusammenhang mit der vorliegenden Offenbarung auch als "Signalintensität" bezeichnet wird, mit einer hohen Empfindlichkeit, welche auch als "Sensitivität" bezeichnet wird, und/oder mit einer geringen räumlichen, zeitlichen und/oder spektralen Auflösung erfasst und/oder mit einer geringen räumlichen, zeitlichen und/oder spektralen Auflösung und/oder Selektivität geprüft. Die Auflösung bei der Erfassung und/oder die Auflösung und/oder die Selektivität bei der Prüfung wird bzw. werden im Zusammenhang mit der vorliegenden Offenbarung auch als "Spezifität" bezeichnet. Das erste Halbzeug wird nur dann zur Weiterverarbeitung zu einem Wertdokument oder einem zur Herstellung eines Wertdokuments verwendbaren zweiten Halbzeug freigegeben, wenn die gemessene Signalintensität ein erstes Prüfkriterium erfüllt, indem sie beispielsweise unterhalb eines ersten Schwellenwertes liegt. In einem weiteren Beispiel kann das erste Prüfkriterium erfüllt sein, wenn eine Differenz von zwei gemessenen Signalintensitäten der ersten optischen Strahlung, beispielsweise von Signalintensitäten bei verschiedenen Detektionswellenlängen, unterhalb eines ersten vorgegebenen Schwellenwerts liegt. Beispielsweise kann dies ein Maß für den Kontrast eines Signalpeaks über einem Untergrund sein. Optional kann eine Signalintensität, insbesondere deren Maximum über einen vorbestimmten Messzeitraum und/ oder räumlichen Messbereich, vom Sensor ausgegeben und insbesondere für eine Bedienperson angezeigt werden. Alternativ oder zusätzlich kann vorgesehen sein, dass entsprechende Informationen zum Ergebnis der Prüfung (z.B. "OK" bzw. "NICHT OK") an die Bedienperson ausgegeben werden.

Nach optionalen weiteren Zwischenschritten wird anschließend der Merkmalsstoff in das zur Weiterverarbeitung freigegebene erste Halbzeug ein- bzw. auf dieses aufgebracht, wodurch ein merkmalshaltiges zweites Halbzeug bzw. ein merkmalshaltiges Wertdokument erhalten bzw. hergestellt wird.

Eine von dem auf diese Weise erhaltenen bzw. hergestellten zweiten Halbzeug bzw. Wertdokument ausgehende zweite optische Strahlung, welche im Zusammenhang mit der vorliegenden Offenbarung auch als "Merkmalsintensität" bezeichnet wird, wird, insbesondere an einer repräsentativen Stichprobe, mit einer höheren räumlichen, zeitlichen und/oder spektralen Auflösung und/oder einer geringeren Empfindlichkeit, welche auch als "Sensitivität" bezeichnet wird, erfasst und/oder mit einer höheren räumlichen, zeitlichen und/oder spektralen Auflösung und/oder Selektivität geprüft als die erste optische Strahlung. Die Auflösung bei der Erfassung und/oder die Auflösung und/oder die Selektivität bei der Prüfung wird bzw. werden im Zusammenhang mit der vorliegenden Offenbarung auch als "Spezifität" bezeichnet. Bevorzugt wird die Merkmalsintensität mit höherer Spezifität gemessen bzw. geprüft als die Signalintensität.

Die erfasste zweite optische Strahlung wird anhand mindestens eines zweiten Prüfkriteriums geprüft. Falls das mindestens eine zweite Prüfkriterium erfüllt ist, wird das zweite Halbzeug zur Weiterverarbeitung freigegeben bzw. das Wertdokument als umlauffähig freigegeben.

Die erste Messung am nicht merkmalshaltigen ersten Halbzeug weist dabei eine höhere Sensitivität und/oder eine geringere Spezifität auf als die zweite Messung am merkmalshaltigen zweiten Halbzeug bzw. Wertdokument. Höhere Sensitivität bedeutet vorzugsweise, dass bereits eine geringere Intensität zu einem vom Rauschen unterscheidbaren Detektorsignal führt. Geringere Spezifität bedeutet vorzugsweise, dass die erste Messung am ersten Halbzeug hinsichtlich der zeitlichen und/oder räumlichen und/oder spektralen Eigenschaften der vom ersten Halbzeug ausgehenden ersten optischen Strahlung weniger selektiv ist als die zweite Messung am zweiten Halbzeug bzw. Wertdokument.

Beispielsweise ist der zeitliche Messbereich und/oder der räumliche Messbereich und/oder der spektrale Messbereich der ersten Messung größer als der entsprechende Messbereich der zweiten Messung. Bei der ersten Messung kann z.B. zeitlich und/oder räumlich und/oder spektral integriert werden, während bei der zweiten Messung im entsprechenden Messbereich (z.B. dem der ersten Messung) mehrere zeitlich/räumlich/spektral verschiedene Messpunkte erfasst werden. Dabei ist vorzugsweise der zeitliche Messbereich der zweiten Messung in dem der ersten Messung enthalten und/oder der spektrale Messbereich der zweiten Messung ist in dem der ersten Messung enthalten.

Alternativ oder zusätzlich werden bei der ersten Messung die Daten ohne Selektion oder mit geringerer Selektion als bei der zweiten Messung berücksichtigt, beispielsweise erfolgt bei der ersten Messung keine Einschränkung hinsichtlich der Abklingzeiten und/oder keine Einschränkung hinsichtlich der Verteilung der Merkmalssignale und/oder keine Einschränkung hinsichtlich der Spektralform der Signale.

Vorzugsweise umfasst eine Bestrahlung des ersten Halbzeugs bei der ersten Messung alle Spektralanteile, die auch bei der zweiten Messung zu einer Bestrahlung des zweiten Halbzeugs bzw. Wertdokuments verwendet werden.

Besonders bevorzugt werden bei der ersten Messung die (hinsichtlich Spektrum, Modulation und/oder Intensität) gleichen Parameter für die Bestrahlung verwendet wie bei der zweiten Messung.

Die Bestrahlung des ersten Halbzeugs bei der ersten Messung kann aber auch spektral breitbandiger und/oder zeitlich weniger moduliert sein als die Bestrahlung bei der zweiten Messung. Beispielsweise kann die Bestrahlung bei der zweiten Messung gepulst und bei der ersten Messung kontinuierlich sein. Beispielsweise können bei der Bestrahlung bei der zweiten Messung zwei Wellenlängen abwechselnd auf das Wertdokument bzw. zweite Halbzeug eingestrahlt werden, während bei der ersten Messung beide Wellenlängen gleichzeitig auf das erste Halbzeug eingestrahlt werden.

Auf diese Weise kann bei der zweiten Messung der Merkmalsintensität am Wertdokument bzw. zweiten Halbzeug die charakteristische Eigenschaft des darin enthaltenen Merkmalsstoffes genau geprüft werden, während die vorausgehende erste Messung der Signalintensität am ersten Halbzeug schnell und einfach und insbesondere auch empfindlicher hinsichtlich geringer Verunreinigungen ist und keine und/oder nur wenige Details zu charakteristischen Eigenschaften des Merkmalsstoffes und/oder diesbezüglicher Prüfkriterien und/ oder Referenzwerten preisgibt bzw. diese gar nicht erst geprüft werden.

Dadurch können Verunreinigungen im ersten Halbzeug, welche die Merkmalsmessung am zweiten Halbzeug bzw. Wertdokument stören können, frühzeitig erkannt und gegebenenfalls durch Aussortieren des betreffenden Halbzeugs vermieden werden. Dadurch wird das Risiko vermieden oder zumindest stark reduziert, dass selbst bei korrekter Ein- bzw. Aufbringung und Dosierung des Merkmalsstoffs keine hinreichende Übereinstimmung der aus der erfassten zweiten optischen Strahlung ermittelten Eigenschaft(en) mit einer vorbestimmten Referenz festgestellt werden kann, so dass das eigentlich fertige zweite Halbzeug oder eigentlich fertige Wertdokument verworfen bzw. vernichtet werden müsste, was einen erheblichen Aufwand darstellt. Durch die Prüfung des ersten Halbzeugs bzw. den ersten Betriebsmodus des Sensorsystems wird somit insgesamt der Materialausschuss reduziert und eine schnellere und effizientere Herstellung von Wertdokumenten ermöglicht.

Darüber hinaus ist es möglich, die bei einem solchen Herstellungsverfahren notwendigen Qualitätskontroll-Messungen während der Herstellung des Wertdokuments, insbesondere am ersten Halbzeug, mit demselben oder zumindest einem baugleichen Sensor bzw. Sensorsystem durchzuführen wie die Ausgangskontrolle des fertigen Wertdokuments. Dies ermöglicht einen geringeren Material- und Platzbedarf (ein Sensor vs. zwei Sensoren) und eine bessere Vergleichbarkeit der Messungen. Beispielsweise wird zum Erfassen und Prüfen der zweiten optischen Strahlung derselbe oder ein (in Bezug auf seine Hardware bzw. Messelemente) baugleicher Sensor verwendet wie zum Erfassen und Prüfen der ersten optischen Strahlung. Die baugleichen Sensoren können sich aber in ihrer Software unterscheiden.

Zusammenfassend ist festzuhalten, dass das Verfahren und Sensorsystem gemäß der vorliegenden Offenbarung auf einfache Weise eine effiziente Herstellung und sichere Qualitätsprüfung von Wertdokumenten ermöglicht, wobei insbesondere der Materialausschuss reduziert wird.

Im Sinne der vorliegenden Offenbarung umfasst der Begriff "Erfassen" vorzugsweise sowohl eine Bestrahlung des ersten und/oder zweiten Halbzeugs bzw. Wertdokuments, um dieses zur Abgabe der ersten bzw. zweiten optischen Strahlung zu veranlassen, als auch eine Detektion der in Antwort auf die Bestrahlung vom ersten und/oder zweiten Halbzeug bzw. Wertdokument ausgehenden optischen Strahlung.

Dementsprechend kann beim Erfassen eine höhere bzw. geringere Empfindlichkeit und/oder Auflösung durch eine entsprechende Ausgestaltung und/oder Betriebsweise einer Detektoreinrichtung (z.B. Integrationszeiten, Anzahl und/oder Lage von Spektralkanälen, Abtastraten etc.) und/oder durch eine entsprechende Ausgestaltung und/oder Betriebsweise einer Bestrahlungseinrichtung (z.B. Intensität, spektrale Zusammensetzung, zeitliche Modulation etc.) erreicht werden.

Beispielsweise kann eine höhere Empfindlichkeit beim Erfassen der ersten optischen Strahlung im ersten Betriebsmodus dadurch erreicht werden, dass die Intensität der optischen Strahlung, mit welcher das erste Halbzeug bestrahlt wird, größer ist als beim Bestrahlen des zweiten Halbzeugs bzw. Wertdokuments im zweiten Betriebsmodus. Alternativ oder zusätzlich kann aber auch vorgesehen sein, dass bei der Detektion der ersten optischen Strahlung im ersten Betriebsmodus längere Integrations- oder Mittelungszeiten an der Detektoreinrichtung eingestellt werden als beim Erfassen der zweiten optischen Strahlung im zweiten Betriebsmodus.

Beispielsweise kann eine kleinere spektrale Auflösung beim Erfassen bzw. eine geringere spektrale Selektivität beim Prüfen der ersten optischen Strahlung im ersten Betriebsmodus dadurch erreicht werden, dass die Detektoreinrichtung nur einen Spektralkanal aufweist, welcher die erste optische Strahlung breitbandig erfassen kann, oder mehrere Spektralkanäle aufweist, welche jedoch zusammen bzw. als Gesamtheit betrachtet werden, beispielsweise indem die in allen Spektralkanälen detektierten Intensitäten summiert und/oder gemittelt werden und/ oder daraus ein Maximalwert bestimmt wird, um eine Signalintensität zu erhalten, wohingegen im zweiten Betriebsmodus nur die in einem (schmalbandigen) Spektralkanal der Detektoreinrichtung oder die in mehreren Spektralkanälen der Detektoreinrichtung erfassten Intensitäten bei der Prüfung berücksichtigt werden.

Beispielsweise kann eine kleinere räumliche Auflösung beim Erfassen bzw. eine geringere räumliche Selektivität beim Prüfen der ersten optischen Strahlung im ersten Betriebsmodus dadurch erreicht werden, dass die Detektoreinrichtung die über einen breiten räumlichen Bereich oder - im Falle einer Erfassung entlang mehrerer Messspuren während einer Relativbewegung - die von mehreren Spuren vom ersten Halbzeug ausgehende erste optische Strahlung erfasst, welche zusammen bzw. als Gesamtheit betrachtet wird, beispielsweise indem die in den einzelnen Spuren detektierten Intensitäten summiert und/oder gemittelt werden und/oder daraus ein Maximalwert bestimmt wird, um eine Signalintensität zu erhalten, wohingegen im zweiten Betriebsmodus nur die in einer oder mehreren (bestimmten) Spuren erfassten Intensitäten bei der Prüfung separat berücksichtigt werden.

Weitere Beispiele zur Realisierung einer geringeren Spezifität bei der Erfassung und/oder Prüfung der ersten optischen Strahlung im Vergleich zur Erfassung und/oder Prüfung der zweiten optischen Strahlung werden weiter unten im Zusammenhang mit den Figuren beschrieben.

Vorzugsweise wird anhand des ersten Prüfkriteriums geprüft, ob eine Intensität der ersten optischen Strahlung kleiner ist als ein vorgegebener erster Schwellenwert. Dadurch kann auf einfache und zuverlässige Weise gewährleistet werden, dass das erste Halbzeug nur dann für eine Weiterverarbeitung zum zweiten Halbzeug bzw. Wertdokument freigegeben wird, wenn im ersten Halbzeug keine oder nur so viel Verunreinigungen enthalten sind, dass die auf die Verunreinigungen zurückgehende optische Strahlung eine Messung bzw. Bestimmung von Eigenschaften des im zweiten Halbzeug bzw. Wertdokument enthaltenen Merkmalsstoffes nicht stört oder zumindest nicht signifikant beeinträchtigt.

Vorzugsweise wird anhand der zweiten optischen Strahlung mindestens eine charakteristische Eigenschaft des in bzw. auf das Wertdokument bzw. zweite Halbzeug eingebrachten bzw. aufgebrachten Merkmalsstoffes ermittelt und in einem ersten Prüfungsschritt anhand des mindestens einen zweiten Prüfkriteriums geprüft, ob die ermittelte charakteristische Eigenschaft des Merkmalsstoffes mit mindestens einer vorgegebenen Eigenschaft übereinstimmt oder zumindest ähnlich ist. Dadurch kann zuverlässig auf das Vorhandensein eines bestimmten bzw. gewünschten Merkmalsstoffes im zweiten Halbzeug bzw. Wertdokument geschlossen werden (qualitative Prüfung des Merkmalsstoffes).

Bei der mindestens einen charakteristischen Eigenschaft des Merkmalsstoffes bzw. der vorgegebenen Eigenschaft handelt es sich vorzugsweise um mitidestens eine der folgenden Eigenschaften der vom Merkmalsstoff und/ oder dem zweiten Halbzeug bzw. Wertdokument ausgehenden zweiten optischen Strahlung: i) spektrale Eigenschaften, wie z.B. die Intensität in bestimmten Spektralbereichen (Fingerprint), die Lage, Intensität oder Breite spektraler Maxima, Minima oder Schultern, absolut oder relativ zueinander; ii) zeitliche Eigenschaften, wie z.B. die Intensität zu bestimmten Zeitpunkten relativ zu einem Anregungspuls der Bestrahlung, absolut oder relativ zueinander, eine Ab- oder Anklingzeit, ein Verlauf oder eine funktionale Form (Fitparameter) der zeitaufgelösten Merkmalsintensität, die Lage oder Intensität eines zeitlichen Intensitätsmaximums; iii) Kombinationen von spektralen und zeitlichen Eigenschaften (z.B. Abklingzeiten in mehreren Spektralkanälen, Emissionsspektrum zu mehreren Messzeitpunkten); iv) Eigenschaften nach komplexer Anregung durch die Bestrahlung (z.B. mehrere Anregungswellenlängen, komplexe zeitliche Modulation des Anregungslichts).

Vorzugsweise wird in einem zweiten Prüfungsschritt anhand des mindestens einen zweiten Prüfkriteriums geprüft, ob eine Intensität der zweiten optischen Strahlung größer ist als ein vorgegebener zweiter Schwellenwert und/oder innerhalb eines vorgegebenen Toleranzintervalls liegt. Dadurch kann auf einfache Weise auf das Vorhandensein einer bestimmten bzw. gewünschten Menge eines/ des gewünschten Merkmalsstoffes im zweiten Halbzeug bzw. Wertdokument geschlossen werden (quantitative Prüfung des Merkmalsstoffes).

Vorzugsweise wird der zweite Prüfungsschritt nach dem ersten Prüfungsschritt durchgeführt und/oder der zweite Prüfungsschritt nur dann durchgeführt, wenn das mindestens ein zweite Prüfkriterium im ersten Prüfungsschritt erfüllt wird. Bei der letztgenannten Alternative wird im ersten Schritt also geprüft, ob die charakteristische Eigenschaft hinreichend nahe an einer für die jeweilige Wertdokumentklasse vorbestimmten Referenz liegt, d.h. ob der Merkmalsstoff bzw. die von vom Merkmalsstoff ausgehende zweite optische Strahlung die für die Wertdokument-Klasse vorbestimmten Eigenschaften hat. Nur, wenn diese Prüfung erfolgreich ist, wird im zweiten Schritt geprüft, ob die Merkmalsintensität oberhalb eines zweiten Schwellenwerts bzw. innerhalb eines vorgegebenen Toleranzintervalls liegt, d.h. ob der Merkmalsstoff korrekt dosiert wurde. Nur wenn auch diese Prüfung erfolgreich ist, wird das zweite Halbzeug zur Weiterverarbeitung freigegeben bzw. wird das Wertdokument als umlauffähig freigegeben. Hierdurch wird also der Merkmalsstoff sowohl in qualitativer als auch in quantitativer Hinsicht geprüft, so dass auf das Vorhandensein einer bestimmten Menge eines bestimmten Merkmalsstoffes im zweiten Halbzeug bzw. Wertdokument geschlossen werden kann.

Der Merkmalsstoff ist in dem Wertdokument bzw. in dem zweiten Halbzeug bei Umgebungslicht für das bloße Auge unsichtbar. Vorzugsweise wird ein Merkmalsstoff verwendet, bei welchem die bei der Prüfung verwendeten bzw. verwendbaren Lichtwellenlängen für eine Bestrahlung und/oder die Abgabe (Remission, Transmission, Emission) von optischer Strahlung im unsichtbaren Spektralbereich liegen. Dies erhöht die Fälschungssicherheit bzw. erschwert die Nachweisbarkeit für nicht autorisierte Personenkreise.

Im Sinne der vorliegenden Offenbarung kann unter dem Begriff "optische Strahlung" elektromagnetische Strahlung im infraroten und/ oder sichtbaren und/oder ultravioletten Spektralbereich verstanden werden, bevorzugt zwischen 100 nm und 100 µm, besonders bevorzugt zwischen 200 nm und 3000 nm. In diesem Bereich können Strahlungsquellen und -detektoren bei Raumtemperatur und unter gewöhnlicher Luft betrieben werden.

Der unsichtbare Spektralbereich kann den infraroten und ultravioletten Spektralbereich umfassen, bevorzugt zwischen 100 nm und 380 nm sowie zwischen 780 nm und 100 µm.

Vorzugsweise ist die erfasste erste und/oder zweite optische Strahlung charakteristisch für zumindest eine der folgenden optischen Eigenschaften des ersten Halbzeugs und/oder Wertdokuments bzw. zweiten Halbzeugs: Lumineszenz (Fluoreszenz, Phosphoreszenz), Raman-Streuung, insbesondere oberflächenverstärkte Raman-Streuung (SERS), und/oder Absorption. Vorzugsweise weist der mindestens eine Merkmalsstoff hinsichtlich Lumineszenz, Raman-Streuung bzw. Absorption charakteristische Eigenschaften auf, die diesen von anderen Merkmalsstoffen zuverlässig, vorzugsweise eindeutig, unterscheiden. Dies ermöglicht eine hohe Fälschungssicherheit und erschwerte Nachweisbarkeit durch unautorisierte Personenkreise.

Vorzugsweise sind die erfasste erste und zweite optische Strahlung charakteristisch für dieselbe optische Eigenschaft des ersten Halbzeugs und Wertdokuments bzw. zweiten Halbzeugs. Vorzugsweise erfolgt das Erfassen der ersten optischen Strahlung am ersten Halbzeug (erster Betriebsmodus) und das Erfassen der zweiten optischen Strahlung am zweiten Halbzeug bzw. Wertdokument (zweiter Betriebsmodus) durch dieselbe optische Messmethode, insbesondere beides durch Messung der Lumineszenz (durch Erfassung der emittierten optischen Strahlung), oder beides durch Messung der Raman-Streuung, insbesondere oberflächenverstärkte Raman-Streuung (SERS) (durch Raman-Spektroskopie) oder beides durch Messung der Absorption (durch Messung von Remission und/oder Transmission). Die während des Herstellungsprozesses am ersten Halbzeug vorgenommenen Qualitätskontroll-Messungen können dadurch mit demselben oder zumindest einem baugleichen Sensor bzw. Sensorsystem durchgeführt werden wie die Ausgangskontrolle des fertigen Wertdokuments, wodurch der Materialund Platzbedarf (ein Sensor vs. zwei Sensoren) reduziert und/oder eine bessere Vergleichbarkeit der Messungen erreicht wird.

Vorzugsweise ist das erste Halbzeug ein Wertdokument-Substrat, in und/oder auf welches der Merkmalsstoff, insbesondere mittels eines Druckvorgangs, ein- bzw. aufgebracht wird, um das Wertdokument zu erhalten.

Alternativ oder zusätzlich kann es sich bei dem ersten Halbzeug um eine Druckfarbe handeln, in welche der Merkmalsstoff eingebracht wird, um das zweite Halbzeug in Form einer den Merkmalsstoff enthaltenden Druckfarbe zu erhalten, mittels welcher ein Wertdokument-Substrat bedruckt werden kann.

Alternativ oder zusätzlich ist das erste Halbzeug eine Papier-Pulpe, in welche der Merkmalsstoff eingebracht wird und aus welcher das zweite Halbzeug, insbesondere in Form eines Wertdokument-Substrats, gefertigt wird.

Alternativ oder zusätzlich ist das erste Halbzeug eine PolymerSchmelze (sog. Polymer-Melt), in welche der Merkmalsstoff eingebracht wird und aus welcher dann das zweite Halbzeug, insbesondere in Form eines Polymer-Substrats und/oder eines Folienstreifens zum Einbringen und/oder Aufbringen in bzw. auf ein Wertdokument-Substrat, gefertigt wird.

Der mindestens eine Merkmalsstoff kann bei der Herstellung von Wertdokumenten in Form von pulverförmigen Stoffen bzw. Pigmenten dem ersten Halbzeug zugesetzt werden, z.B. einer Papier-Pulpe, einem Master Batch/Polymer-Melt oder einer Druckfarbe bzw. einem Klarlack oder einem Farbkonzentrat. Das erste Halbzeug wird dadurch zum merkmalshaltigen zweiten Halbzeug, z.B. einer Pulpe, einem Wertdokument-Substrat (in Bahnoder Blattform), einem Druckerzeugnis (in Form von Bahn, Bogen oder Einzelnutzen), einem Folienelement (Patch, Faden, Folienstreifen, Planchetten), einer Faser oder einer Druckfarbe bzw. einem Farbkonzentrat, bzw. zum fertigen Wertdokument weiterverarbeitet.

Die vorstehend im Zusammenhang mit der Herstellung eines zweiten Halbzeugs bzw. Wertdokuments erwähnten bevorzugten Aspekte bzw. Vorteile gelten selbstverständlich auch für das Sensorsystem, das zur Qualitätsprüfung bei einem solchen Herstellungsverfahren eingesetzt werden kann, entsprechend.

Vorzugsweise weist die mindestens eine Erfassungsvorrichtung auf: eine Bestrahlungseinrichtung, welche dazu eingerichtet ist, eine dritte optische Strahlung zu erzeugen und im ersten Betriebsmodus das erste Halbzeug und im zweiten Betriebsmodus das Wertdokument bzw. zweite Halbzeug mit der dritten optischen Strahlung zu beaufschlagen; und mindestens eine Detektoreinrichtung, welche dazu eingerichtet ist, die in Antwort auf die Beaufschlagung mit der dritten optischen Strahlung vom ersten Halbzeug ausgehende erste optische Strahlung bzw. vom Wertdokument bzw. zweiten Halbzeug ausgehende zweite optische Strahlung zu erfassen. Bei dieser Ausführung wird also für die Messung der Signalintensität am ersten Halbzeug die gleiche Bestrahlungseinrichtung bzw. die gleiche Beleuchtung als Anregung verwendet wie für die Messung der Merkmalsintensität am zweiten Halbzeug bzw. Wertdokument. Dies erlaubt die Verwendung eines technisch einfacheren und günstiger herstellbaren Sensors bzw. Sensorsystems.

Alternativ kann vorzugsweise aber auch vorgesehen sein, dass die mindestens eine Erfassungsvorrichtung aufweist: eine erste Bestrahlungseinrichtung, welche dazu eingerichtet ist, eine dritte optische Strahlung zu erzeugen und im ersten Betriebsmodus das erste Halbzeug mit der dritten optischen Strahlung zu beaufschlagen; eine zweite Bestrahlungseinrichtung, welche dazu eingerichtet ist, eine vierte optische Strahlung zu erzeugen, welche von der dritten optischen Strahlung verschieden ist, und im zweiten Betriebsmodus das Wertdokument bzw. zweite Halbzeug mit der vierten optischen Strahlung zu beaufschlagen; und mindestens eine Detektoreinrichtung, welche dazu eingerichtet ist, die in Antwort auf die Beaufschlagung mit der dritten optischen Strahlung vom ersten Halbzeug ausgehende erste optische Strahlung und die in Antwort auf die Beaufschlagung mit der vierten optischen Strahlung vom Wertdokument bzw. zweiten Halbzeug ausgehende zweite optische Strahlung zu erfassen. Bei dieser Ausführung wird für die Messung der Signalintensität am ersten Halbzeug also eine andere Bestrahlungseinrichtung bzw. Beleuchtung als Anregung verwendet als für die Messung der Merkmalsintensität am zweiten Halbzeug bzw. Wertdokument.

Vorzugsweise weist die dritte optische Strahlung eine höhere Intensität und/oder ein breiteres Spektrum und/oder eine größere Anzahl unterschiedlicher spektraler Komponenten auf als die vierte optische Strahlung. Mit anderen Worten ist bei der Messung am ersten Halbzeug vorzugsweise die Intensität der Beleuchtung höher als bei der Messung am zweiten Halbzeug bzw. Wertdokument, so dass bei der Messung am ersten Halbzeug eine größere Empfindlichkeit (Sensitivität) erreicht wird. Alternativ oder zusätzlich kann die Beleuchtung bei der Messung am ersten Halbzeug spektral breitbandiger sein (z.B. zwei Wellenlängen statt nur eine Wellenlänge oder spektral breitbandig statt wenige diskrete Linien). Dies erlaubt insgesamt eine allgemeinere, unspezifischere bzw. empfindlichere Detektion der Signalintensität am ersten Halbzeug.

Das Sensorsystem kann durch ein und denselben Sensor, d.h. dasselbe Gerät, gebildet werden, wobei dieser Sensor die mindestens eine Erfassungsvorrichtung aufweist, die zum Erfassen der ersten und der zweiten optischen Strahlung ausgebildet ist, und die mindestens eine Prüfvorrichtung zur Prüfung der ersten und zweiten optischen Strahlung aufweist. Dieser Sensor ist in diesem Fall wahlweise in dem ersten oder in dem zweiten Betriebsmodus betreibbar.

Alternativ weist das Sensorsystem einen für die Erfassung bzw. Prüfung der Signalintensität am ersten Halbzeug spezifisch ausgelegten ersten Sensor ("Clean-Sensor") auf, der in dem ersten Betriebsmodus betreibbar ist, und einen für die Erfassung bzw. Prüfung der Merkmalsintensität am zweiten Halbzeug bzw. Wertdokument spezifisch ausgelegten zweiten Sensor ("Merkmals-Sensor") auf, der in dem zweiten Betriebsmodus betreibbar ist. Der erste und/oder zweite Sensor kann wahlweise im ersten oder zweiten Betriebsmodus betreibbar sein. Der erste Sensor kann aber auch nur im ersten Betriebsmodus betreibbar sein, aber nicht im zweiten Betriebsmodus, und/oder der zweite Sensor kann nur im zweiten Betriebsmodus betreibbar sein, aber nicht im ersten Betriebsmodus. Vorzugsweise ist der zweite Sensor (in Bezug auf seine Hardware bzw. Messelemente) baugleich mit dem ersten Sensor. Dadurch wird der Herstellungsaufwand für das Sensorsystem reduziert.

Bei einer alternativen Ausführung kann das Sensorsystem für die Erfassung bzw. Prüfung der Signalintensität am ersten Halbzeug aber auch einen spezifisch dafür ausgelegten ersten Sensor ("Clean-Sensor") aufweisen, der (nur) in dem ersten Betriebsmodus betreibbar ist. Vorzugsweise ist der erste Sensor nicht mit der Authentisierungsalgorithmik im Zusammenhang mit der Erfassung bzw. Prüfung der Merkmalsintensität ausgestattet und/oder enthält gewisse - für die selektive Merkmalsidentifikation notwendige - Trennelemente wie etwa Filter und/oder Spektrometer nicht oder nur in geringerer Güte. Vorzugsweise beinhaltet das Sensorsystem darüber hinaus einen für die Erfassung bzw. Prüfung der Merkmalsintensität am zweiten Halbzeug bzw. Wertdokument spezifisch ausgelegten zweiten Sensor ("Merkmals-Sensor"), der nur in dem zweiten Betriebsmodus oder wahlweise im ersten und zweiten Betriebsmodus betreibbar ist. Der zweite Sensor ist mit der erforderlichen Authentisierungsalgorithmik (zum Prüfen der zweiten optischen Strahlung anhand mindestens eines zweiten Prüfkriteriums) ausgestattet und/oder enthält die für eine selektive Merkmalsidentifikation notwendigen Trennelemente wie etwa Filter und/oder Spektrometer.

Wenn der zur Qualitätskontrolle verwendete erste Sensor, der die erste optische Strahlung des ersten Halbzeugs erfasst, nur im ersten Betriebsmodus betreibbar ist, braucht dieser erste Sensor vorteilhaft nicht mit den ggf. streng vertraulichen Referenzwerten bzw. nicht mit der Authentisierungsalgorithmik bzw. nicht mit den zur selektiven Merkmalsidentifikation notwendigen Trennelementen ausgestattet zu werden, die der zweite Sensor im zweiten Betriebsmodus bei der Ausgangskontrolle des zweiten Halbzeugs bzw. des Wertdokuments verwendet.

Vorzugsweise ist das Sensorsystem, insbesondere der Sensor bzw. der erste Sensor, so eingerichtet, dass er/es sich unmittelbar nach einer Aktivierung, insbesondere nach einem Einschalten oder einer Inbetriebnahme, (automatisch) im ersten Betriebsmodus befindet und/oder dass er/es durch eine Bedienperson vom ersten Betriebsmodus in den zweiten Betriebsmodus umgeschaltet werden kann. Mit anderen Worten befindet sich der betreffende Sensor nach dem Einschalten oder seiner Inbetriebnahme im Cleanmode und wird manuell in den Messmode geschaltet. Dies bietet den Vorteil einer zeitlich an den Produktionsablauf angepassten Betriebsweise mit weniger benötigten Einstellungen bzw. Eingriffen. Weiterhin kann die Durchführung der ersten Messung am ersten Halbzeug dabei nicht vergessen werden, da diese automatisch in den Ablauf integriert ist.

Das erste Prüfkriterium bzw. das erste Prüfsignal betrifft z.B., ob die Intensität der ersten optischen Strahlung kleiner ist als ein vorgegebener erster Schwellenwert oder ob eine Differenz von zwei gemessenen Intensitäten der ersten optischen Strahlung, beispielsweise von zwei Intensitäten bei verschiedenen Detektionswellenlängen, unterhalb eines vorgegebenen ersten Schwellenwerts liegt. Das Sensorsystem ist dazu ausgebildet, dass im ersten Betriebsmodus das erste Halbzeug auf Verunreinigungen geprüft wird, insbesondere im Hinblick darauf, ob der Einfluss der Verunreinigungen auf die erste optische Strahlung akzeptabel gering ist.

Das Sensorsystem ist vorzugsweise auch dazu ausgebildet, dass in dem zweiten Betriebsmodus anhand des mindestens einen zweiten Prüfkriteriums geprüft wird, ob die ermittelte charakteristische Eigenschaft des Merkmalsstoffes mit einer vorgegebenen Eigenschaft übereinstimmt oder zumindest dazu ähnlich ist und/oder ob es sich bei dem eingebrachten bzw. aufgebrachten Merkmalsstoff um den gewünschten Merkmalsstoff handelt oder nicht. Das Sensorsystem kann auch dazu ausgebildet sein, dass anhand des mindestens einen zweiten Prüfkriteriums auch geprüft wird, ob eine Intensität der zweiten optischen Strahlung größer ist als der vorgegebene zweite Schwellenwert und/oder innerhalb eines vorgegebenen Toleranzintervalls liegt und/oder ob ein/der gewünschte Merkmalsstoff in der gewünschten Menge in/auf dem zweiten Halbzeug bzw. Wertdokument vorhanden ist.

Weitere Vorteile, Merkmale und Anwendungsmöglichkeiten der vorliegenden Erfindung ergeben sich aus der nachfolgenden Beschreibung in Zusammenhang mit den Figuren. Es zeigen:
- Fig. 1: eine schematische Darstellung zur Veranschaulichung eines Beispiels eines Verfahrens zur Herstellung von Wertdokumenten;
- Fig. 2: eine schematische Darstellung zur Veranschaulichung eines Beispiels einer Prüfung der erfassten optischen Strahlung;
- Fig. 3: ein erstes Beispiel eines Sensorsystems;
- Fig. 4: ein zweites Beispiel eines Sensorsystems; und
- Fig. 5: eine schematische Darstellung zur Veranschaulichung weiterer Beispiele eines Sensorsystems.

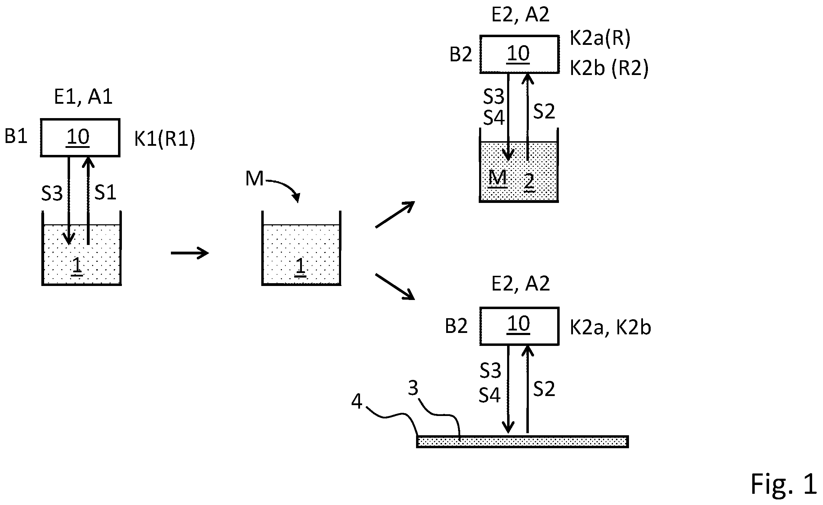

Figur 1 zeigt eine schematische Darstellung zur Veranschaulichung eines Beispiels eines Verfahrens zur Herstellung von Wertdokumenten. Mittels eines Sensorsystems 10 wird ein bereitgestelltes erstes Halbzeug 1, beispielsweise eine Druckfarbe, eine Papier-Pulpe oder ein Wertdokument-Substrat, mit optischer Strahlung S3 beaufschlagt und die vom ersten Halbzeug 1 ausgehende erste optische Strahlung S1 ("Signalintensität") erfasst.

Bei der ersten optischen Strahlung S1 handelt es sich vorzugsweise um Strahlung, welche aufgrund einer durch die optische Strahlung S3 im ersten Halbzeug 1 angeregten Lumineszenz oder Raman-Streuung, insbesondere einer oberflächenverstärkten Raman-Streuung, vom ersten Halbzeug 1 emittiert oder gestreut und/oder aufgrund einer zumindest teilweisen Absorption oder (ggf. inelastischen) Streuung der optischen Strahlung S3 durch das erste Halbzeug 1 remittiert und/oder transmittiert wird.

In einem ersten Betriebsmodus B1, welcher auch als "Clean-Mode" bezeichnet wird, ist das Sensorsystem 10 dazu eingerichtet, die erfasste erste optische Strahlung S1 anhand eines ersten Prüfkriteriums K1 zu prüfen, beispielsweise indem geprüft wird, ob die Intensität der ersten optischen Strahlung S1 kleiner ist als ein vorgegebener erster Schwellenwert R1.

Falls das Prüfkriterium K1 erfüllt ist, wird das erste Halbzeug 1 für die weitere Verarbeitung freigegeben. Falls nicht, wird das erste Halbzeug 1 aus dem Herstellungsprozess genommen bzw. ausgesondert.

Im erstgenannten Fall wird dem ersten Halbzeug 1 in einem weiteren Schritt mindestens ein Merkmalsstoff MS zugesetzt. Bei dem mindestens einen Merkmalsstoff MS handelt es sich vorzugsweise um eine oder mehrere Substanzen, die beispielsweise in fester Form, etwa als Pulver, Melierfasern und/oder Planchetten, oder flüssiger Form vorliegen können und charakteristische Eigenschaften hinsichtlich Lumineszenz, Raman-Streuung und/oder Absorption aufweisen, durch welche diese zuverlässig und/oder eindeutig erkannt bzw. von anderen Substanzen unterschieden werden können und die somit als Echtheitsmerkmal für Wertdokumente dienen können.

Je nach Art des ersten Halbzeugs 1 und/oder des Merkmalsstoffes MS wird durch Zusetzen, Einbringen und/ oder Aufbringen des Merkmalsstoffes MS ein zweites Halbzeug 2 zur weiteren Verwendung bei der Herstellung eines Wertdokuments 4 bzw. ein Wertdokument 4 erhalten.

Handelt es sich bei dem ersten Halbzeug 1 beispielsweise um eine Druckfarbe, so wird durch Zusetzen des Merkmalsstoffes MS als zweites Halbzeug 2 eine merkmalhaltige Druckfarbe erhalten, mittels welcher bei einem Druckvorgang (nicht dargestellt) ein Wertdokument-Substrat 3 bedruckt werden kann.

Handelt es sich bei dem ersten Halbzeug 1 beispielsweise um eine Papier-Pulpe, so wird durch Zusetzen des Merkmalsstoffes MS als zweites Halbzeug 2 eine merkmalhaltige Papier-Pulpe erhalten, aus welcher dann ein merkmalhaltiges Wertdokument-Substrat 3 hergestellt werden kann.

Handelt es sich bei dem ersten Halbzeug 1 beispielsweise um ein - im Allgemeinen nicht merkmalhaltiges - Wertdokument-Substrat, so wird durch Einbringen und/oder Aufbringen, insbesondere Aufdrucken, eines beispielsweise in Form einer merkmalhaltigen Druckfarbe vorliegenden Merkmalsstoffes MS in bzw. auf das Wertdokument-Substrat ein bereits fertiges Wertdokument 4 erhalten oder ein zweites Halbzeug 2 in Form eines bedruckten Wertdokument-Substrats 3 erhalten, welches beispielsweise durch Aufund/oder Einbringen weiterer Sicherheitsmerkmale und/oder durch Zuschneiden zu einem Wertdokument 4 weiterverarbeitet werden kann.

Selbstverständlich können auch mehrere erste Halbzeuge 1 mit dem beschriebenen Verfahren geprüft werden, beispielsweise eine (merkmalsfreie) Papier-Pulpe und eine (merkmalsfreie) Druckfarbe, bevor diese mit einem oder mehreren Merkmalsstoffen MS versehen und als zweite Halbzeuge 2 weiterverarbeitet bzw. zu einem Wertdokument 4 verarbeitet werden.

Durch das Sensorsystem 10 wird das zweite Halbzeug 2 bzw. Wertdokument 4 mit optischer Strahlung S3 oder S4 beaufschlagt und die vom zweiten Halbzeug 2 bzw. Wertdokument 4 ausgehende zweite optische Strahlung S2 ("Merkmalsintensität") erfasst.

In einem zweiten Betriebsmodus B2, welcher auch als "Messmode" bezeichnet wird, ist das Sensorsystem 10 dazu eingerichtet, die erfasste zweite optische Strahlung S2 anhand mindestens eines zweiten Prüfkriteriums K2a, K2b zu prüfen.

Vorzugsweise wird dabei in einem ersten Prüfungsschritt anhand eines zweiten Prüfkriteriums K2a geprüft, ob die zweite optische Strahlung S2 mindestens eine charakteristische Eigenschaft zeigt bzw. für mindestens eine charakteristische Eigenschaft des im zweiten Halbzeug 2 bzw. Wertdokument 4 enthaltenen Merkmalsstoffs MS charakteristisch ist, indem insbesondere geprüft wird, ob die charakteristische Eigenschaft mit einer vorgegebenen Eigenschaft R (Referenz) übereinstimmt oder zumindest ähnlich ist.

Vorzugsweise wird in einem zweiten Prüfungsschritt anhand eines weiteren zweiten Prüfkriteriums K2b geprüft, ob die Intensität der zweiten optischen Strahlung S2 größer ist als ein vorgegebener zweiter Schwellenwert R2 und/oder innerhalb eines vorgegebenen Toleranzintervalls liegt.

Werden die zweiten Prüfkriterien K2a und K2b erfüllt, so wird das zweite Halbzeug 2 zur Weiterverarbeitung zu einem Wertdokument freigegeben bzw. das Wertdokument 4 für den Umlauf freigegeben.

Vorzugsweise wird der zweite Prüfungsschritt nur dann ausgeführt, wenn das zweite Prüfkriterium K2a im ersten Prüfungsschritt erfüllt wird. Ist Letzteres nicht der Fall, wird das zweite Halbzeug 2 nicht für eine Weiterverarbeitung bzw. das Wertdokument 4 nicht für den Umlauf freigegeben. Der zweite Prüfungsschritt kann bei dieser Ausführung entfallen.

Gemäß einem besonders bevorzugten Aspekt der vorliegenden Offenbarung erfolgt die erste Messung am nicht merkmalshaltigen ersten Halbzeug 1 mit einer höheren Empfindlichkeit E1 (Sensitivität) und/oder einer geringeren Auflösung A1 bzw. Spezifität als die zweite Messung, welche am merkmalshaltigen zweiten Halbzeug 2 bzw. Wertdokument 4 mit einer niedrigeren Empfindlichkeit E2 und/oder höheren Auflösung A2 bzw. Spezifität durchgeführt wird. Eine höhere Empfindlichkeit bzw. Sensitivität bedeutet hierbei insbesondere, dass bereits eine geringere Intensität zu einem vom Rauschen unterscheidbaren Detektorsignal führt. Eine geringere Auflösung bzw. Spezifität bedeutet hierbei insbesondere, dass die erste Messung am ersten Halbzeug 1 hinsichtlich der zeitlichen und/oder räumlichen und/oder spektralen Eigenschaften der vom ersten Halbzeug 1 ausgehenden ersten optischen Strahlung S1 weniger aufgelöst bzw. selektiv ist als die zweite Messung am zweiten Halbzeug 2 bzw. Wertdokument 4.

Dadurch kann bei der zweiten Messung der Merkmalsintensität S2 am Wertdokument 4 bzw. zweiten Halbzeug 2 die charakteristische Eigenschaft des darin enthaltenen Merkmalsstoffes MS genau geprüft werden, während die vorausgehende erste Messung der Signalintensität S1 am ersten Halbzeug 1 schnell und einfach und insbesondere auch empfindlicher hinsichtlich darin enthaltener geringer Verunreinigungen ist. Dadurch können Verunreinigungen im ersten Halbzeug 1, welche die Merkmalsmessung am zweiten Halbzeug 2 bzw. Wertdokument 4 stören können, frühzeitig erkannt und gegebenenfalls durch Aussortieren des betreffenden ersten Halbzeugs 1 vermieden werden.

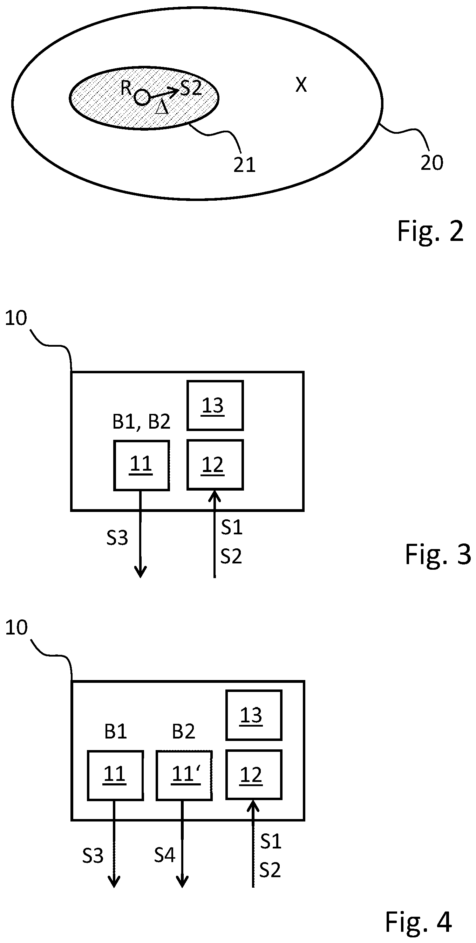

Figur 2 zeigt eine schematische Darstellung zur Veranschaulichung eines Beispiels einer Prüfung der erfassten optischen Strahlung.

Im zweiten Betriebsmodus B2 prüft der Sensor 10 (siehe Figur 1) zunächst in einem ersten Prüfungsschritt die Übereinstimmung der gemessenen Signale S2 mit den erwarteten bzw. vorgegebenen Referenzsignalen R dahingehend, ob die Signale S2 innerhalb einer erlaubten Delta(Δ)-Umgebung um die Referenz R liegen. Die Figur 2 zeigt dabei eine stark vereinfachte schematische Darstellung des im Allgemeinen vieldimensionalen Ähnlichkeitsvergleichs. Vorzugsweise ist dabei auch der Begriff der Merkmalsintensität bzw. Signalintensität S2 (und damit auch der Abstand A) nur innerhalb eines vorgegebenen bzw. akzeptierten Bereichs 21 eines Parameterraumes 20 definiert und bei entsprechend großen Abweichungen z.T. bedeutungslos. Vorzugsweise müssen daher die Messsignale S2 auch innerhalb der Delta-Umgebung zum Referenzpunkt R liegen, um überhaupt eine Merkmalsintensität bestimmen zu können.

Daraus ergibt sich vorzugsweise auch, dass allgemeine Verunreinigungen X im zweiten Halbzeug 2 bzw. Wertdokument 4 nicht einfach mit dem "Merkmals-Sensor" (d.h. dem Sensor 10 im zweiten Betriebsmodus B2) beispielsweise in Einheiten der Merkmalsintensität quantifiziert werden können, sondern dass dafür eine andere Metrik erforderlich ist.

Zur Messung der Signalintensität im ersten Betriebsmodus des Sensors 10 werden daher allgemein optische Signale S1 aufgenommen und quantifiziert, die auch ohne Vorhandensein des Merkmalsstoffes MS ein Maß für Störungen sind, die später bei Anwesenheit des Merkmalsstoffes MS dessen Eigenschaften jedoch verstimmen könnten.

Damit kann auch der Parameterraum 20 außerhalb der Delta-Umgebung quantifiziert werden, so dass der Hersteller des ersten Halbzeugs 1 eine quantitative Rückmeldung zur Qualität des ersten Halbzeugs 1 erhält und daraus notwendige Schritte, beispielsweise zum Reinigen des ersten Halbzeugs 1 selbst und/oder der mit dem ersten Halbzeug 1 in Kontakt kommenden Gerätschaften, ableiten kann. Umgekehrt sind die Signalintensitäten S1 im ersten Betriebsmodus B1 der Sensors 10 im Allgemeinen nicht geeignet, um daraus eine Merkmalsintensität abzuleiten, da hier gezielt andere Messbedingungen hinsichtlich spektraler oder zeitlicher Spezifität verwendet werden.

Figur 3 zeigt ein erstes Beispiel eines Sensorsystems 10, welches vorzugsweise so eingerichtet ist, dass es sowohl für die Erfassung bzw. Prüfung der vom ersten Halbzeug (nicht dargestellt, siehe Figur 1) ausgehenden ersten optischen Strahlung S1 als auch für die Erfassung bzw. Prüfung der vom zweiten Halbzeug bzw. Wertdokument (nicht dargestellt, siehe Figur 1) ausgehenden zweiten optische Strahlung S2 eingesetzt werden kann.

Dabei ist das Sensorsystem 10 dazu eingerichtet, in einem ersten Betriebsmodus B1 (Cleanmode) betrieben zu werden, in dem eine erste Messung bzw. Prüfung der ersten optischen Strahlung S1 bzw. Signalintensität mit geringer Spezifität und/ oder hoher Sensitivität erfolgt, wobei die Signalintensität vorzugsweise mit einem ersten Schwellenwert R1 verglichen wird. Das Sensorsystem 10 weist dazu eine Bestrahlungseinrichtung 11 zur Erzeugung einer dritten optischen Strahlung S3, mit welcher das erste Halbzeug beaufschlagt wird, eine Detektoreinrichtung 12 zur Erfassung der vom ersten Halbzeug ausgehenden ersten optischen Strahlung S1 sowie eine Prüfvorrichtung 13 zur Prüfung der ersten optischen Strahlung S1 auf.

Darüber hinaus ist das Sensorsystem 10 dazu eingerichtet, in einem zweiten Betriebsmodus (Messmode) betrieben zu werden, in dem eine zweite Messung bzw. Prüfung der zweiten optischen Strahlung S2 bzw. Merkmalsintensität mit hoher Spezifität und/oder geringerer Sensitivität erfolgt, wobei eine charakteristische Eigenschaft des Merkmalsstoffes bestimmt und anhand einer Referenz R geprüft wird und im Erfolgsfall die Merkmalsintensität bestimmt und anhand eines zweiten Schwellenwerts R2 geprüft wird.

Bei der vorliegenden Ausführung des Sensorsystems 10 erzeugt die Bestrahlungseinrichtung 11 im zweiten Betriebsmodus B2 die - hinsichtlich des Spektrums, zeitlichen Ablaufs und/oder der Intensität - gleiche dritte optische Strahlung S3 wie im ersten Betriebsmodus B1, so dass das zweite Halbzeug bzw. Wertdokument mit der gleichen optischen Strahlung S3 beaufschlagt wird wie das erste Halbzeug im ersten Betriebsmodus B1. Die daraufhin vom zweiten Halbzeug bzw. Wertdokument ausgehende zweite optische Strahlung S2 wird mittels der Detektoreinrichtung 12 erfasst und in der Prüfeinrichtung 13 wie vorstehend beschrieben geprüft.

Figur 4 zeigt ein zweites Beispiel eines Sensorsystems 10, das sich von dem in Figur 3 gezeigten Beispiel dadurch unterscheidet, dass zusätzlich zu einer ersten Bestrahlungseinrichtung 11 eine zweite Bestrahlungseinrichtung 11' vorgesehen ist, wobei im ersten Betriebsmodus B1 des Sensorsystems 10 die erste Bestrahlungseinrichtung 11 eine dritte optische Strahlung S3 erzeugt, mit welcher das erste Halbzeug beaufschlagt wird, und im zweiten Betriebsmodus B2 die zweite Bestrahlungseinrichtung 11' eine vierte optische Strahlung S4 erzeugt, welche sich von der dritten optischen Strahlung S3 unterscheidet und mit welcher das zweite Halbzeug bzw. Wertdokument beaufschlagt wird. Anders als bei dem in Figur 3 gezeigten Beispiel wird bei dieser Ausführung also das erste Halbzeug mit einer anderen optischen Strahlung beaufschlagt als das merkmalhaltige zweite Halbzeug bzw. Wertdokument. Im Übrigen gelten für das in Figur 4 gezeigte Beispiel die vorstehenden Ausführungen im Zusammenhang mit dem in Figur 3 gezeigten Beispiel entsprechend.

Nachfolgend werden weitere bevorzugte bzw. alternative Ausführungen bzw. Aspekte des Verfahrens zur Herstellung von Wertdokumenten bzw. des Sensorsystems 10 zur Qualitätsprüfung bei der Herstellung von Wertdokumenten näher beschrieben.

Im Zusammenhang mit der vorliegenden Offenbarung wird der Begriff "Spezifität" vorzugsweise sowohl für die spektrale und/oder räumliche und/oder zeitliche Auflösung bei der Erfassung der betreffenden optischen Strahlung S1 bzw. S2 verwendet als auch für die sog. "Selektivität", d.h. für im Zusammenhang mit der Prüfung der jeweiligen optischen Strahlung S1 bzw. S2 vorgenommene Selektion bzw. Auswahl von Komponenten bzw. Daten aus den entsprechenden Messsignalen.

Vorzugsweise umfasst der spektrale und zeitliche Messbereich des Cleanmode B1 den spektralen bzw. zeitlichen Messbereich des Messmode B2.

Vorzugsweise hat der Messmode B2 eine höhere Spezifität als der Cleanmode B1 hinsichtlich der räumlichen und/oder zeitlichen und/oder spektralen Verteilung, der Signale.

Vorzugsweise hat der Cleanmode B1 eine höhere Sensitivität als der Messmode B2, d.h. im Cleanmode B1 können geringere Signale bzw. Signalintensitäten vom Rauschen unterschieden bzw. detektiert werden, was z.B. durch Einstellung längerer Integrations- oder Mittelungszeiten an der Detektoreinrichtung 12 erreicht werden kann.

Vorzugsweise ist das Sensorsystem 10 so eingerichtet, dass es automatisch im ersten Betriebsmodus B1 startet und manuell in den zweiten Betriebsmodus B2 geschaltet werden kann.

Vorzugsweise ist die bei der Messung im ersten Betriebsmodus B1 und/oder im zweiten Betriebsmodus B2 eingestrahlte und/ oder vom ersten Halbzeug 1 bzw. zweiten Halbzeug 2 oder Wertdokument 4 ausgehende, insbesondere emittierte, optische Strahlung S3 und/oder S4 bzw. S1 und/oder S2 für das menschliche Auge unsichtbar, d.h. die optische Strahlung S3 und/ oder S4 bzw. S1 und/ oder S2 liegt im Wesentlichen außerhalb des sichtbaren Spektralbereichs (ca. 380 nm bis ca. 780 nm).

Ferner ist bevorzugt, dass die Messung der Signalintensität S1 und Merkmalsintensität S2 auf verschiedenen Skalen erfolgt, d.h. dieselbe Lichtemission des ersten Halbzeugs 1 entspricht bei Messung im ersten Betriebsmodus B1 einer ersten Signalintensität und bei Messung im zweiten Betriebsmodus B2 einer zweiten, zahlenmäßig verschiedenen, insbesondere nicht nur um einen konstanten Faktor verschiedenen, Merkmalsintensität. Insbesondere können Merkmalsintensität S2 und Signalintensität S1 nicht ineinander umgerechnet werden (z.B. wegen spektral unterschiedlicher Verteilungen der Lichtleistung).

Vorzugsweise ist das Sensorsystem 10 dazu eingerichtet, an in mindestens zwei verschiedenen Formen vorliegenden Halbzeugen 1 bzw. 2 zu messen, wobei es sich insbesondere um mindestens zwei der folgenden Formen handeln kann: Blattgut (Einzel-Nutzen oder ganzer Bogen, bedruckt oder unbedruckt), Substrat-Bahn, Papier-Pulpe, Polymer-Melt, Druckfarbe, Klarlack, Farbkonzentrat, Pigment, Pulver, Folienelement.

Vorzugsweise kann das Sensorsystem 10 bzw. die Prüfeinrichtung 13 dazu eingerichtet sein, eine Signal- bzw. Merkmalsintensität, die an einem Halbzeug 1 bzw. 2 einer ersten Form gemessen wurde, in eine jeweils entsprechende Signal- bzw. Merkmalsintensität umzurechnen, die bei Messung an dem Halbzeug 1 bzw. 2 nach Weiterverarbeitung in eine zweite Form zu erwarten ist.

Vorzugsweise liefert ein Halbzeug 2 mit einer Merkmalsintensität oberhalb des zweiten Schwellenwerts R2 stets Signalintensitäten, welche größer sind als der erste Schwellenwert R1.

Vorzugsweise entspricht die Signalintensität im ersten Betriebsmodus B1 dem Maximum der Merkmalsintensität über eine bestimmte Messdauer und/oder einen bestimmten räumlichen Messbereich.

Vorzugsweise ist das Sensorsystem 10 dazu eingerichtet, vom zweiten Betriebsmodus B2 automatisch in den ersten Betriebsmodus B1 umzuschalten, wenn im zweiten Betriebsmodus B2 die charakteristische Eigenschaft des Sicherheitsmerkmals hinreichend weit vom Referenzwert R entfernt ist oder die charakteristische Eigenschaft nicht bestimmt werden konnte.

Alternativ oder zusätzlich kann das Sensorsystem 10 dazu eingerichtet sein, im ersten Betriebsmodus B1 zu starten und nur dann automatisch in den zweiten Betriebsmodus B2 zu wechseln, wenn die erfasste Signalintensität klein genug ist.

Vorzugsweise kann das Sensorsystem 10 ferner dazu eingerichtet sein, einen Offsetwert im Cleanmode B1 zu bestimmen und diesen an den bzw. im Messmode B2 zu übertragen bzw. zu verwenden, um das Merkmalsignal bzw. die Merkmalsintensität hinsichtlich der von Verunreinigungen verursachten Einflüssen zu korrigieren.

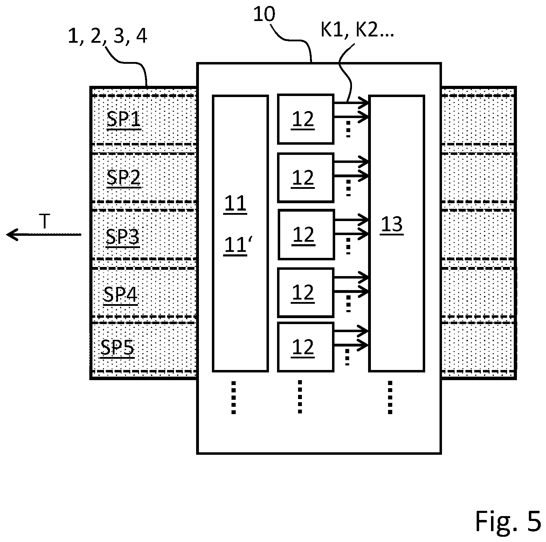

Figur 5 zeigt eine schematische Darstellung zur Veranschaulichung weiterer Beispiele eines Sensorsystems 10. Die Darstellung zeigt eine schematische Draufsicht auf das Sensorsystem 10, unter welchem sich ein zu prüfendes Messobjekt 1 bis 4 befindet, bei welchem es sich je nach Einsatz bzw. Betriebsmodus des Sensorsystems 10 um ein erstes Halbzeug 1, ein zweites Halbzeug 2 bzw. Wertdokument-Substrat 3 oder Wertdokument 4 handeln kann. Aus Anschaulichkeitsgründen ist im vorliegenden Beispiel ein blattförmiges Messobjekt dargestellt.

Das Sensorsystem 10 ist dazu eingerichtet, vom Messobjekt 1 bis 4 ausgehende optische Strahlung zu erfassen, während beide in einer Transportrichtung T relativ zueinander bewegt werden. Beispielsweise kann dabei das Sensorsystem 10 ortsfest sein und das Messobjekt 1 bis 4 mittels einer geeigneten Transporteinrichtung (nicht dargestellt), beispielsweise Rollen, Riemen und/oder Walzen, in Transportrichtung T am Sensorsystem 10 vorbei befördert werden. Umgekehrt kann vorgesehen sein, dass das Messobjekt 1 bis 4 ortsfest ist und das Sensorsystem 10 relativ zum Messobjekt 1 bis 4 bewegt wird.

Das Sensorsystem 10 ist dabei insbesondere dazu eingerichtet, die vom Messobjekt 1 bis 4 ausgehende optische Strahlung während der Relativbewegung entlang einer oder mehrerer Spuren SP1 bis SP5 zu erfassen. Dazu weist das Sensorsystem 10 eine der Anzahl der Spuren entsprechende Anzahl von Detektoreinrichtungen 12 auf, wobei jede der Detektoreinrichtungen 12 einer der Spuren SP1 bis SP5 zugeordnet ist.

Vorzugsweise sind die Detektoreinrichtungen 12 jeweils dazu eingerichtet, die vom Messobjekt 1 bis 4 ausgehende optische Strahlung in einem oder mehreren Spektralbereichen bzw. Spektralkanälen K1, K2, ... zu erfassen und die entsprechenden Signale in eine Prüfvorrichtung 13 weiterzuleiten, in welcher diese weiterverarbeitet bzw. geprüft werden.

Eine erste und gegebenenfalls zusätzliche zweite Bestrahlungseinrichtung 11 bzw. 11' ist im vorliegenden Beispiel dazu eingerichtet, alle Spuren SP1 bis SP5 auf dem Messobjekt 1 bis 4 gleichzeitig mit optischer Strahlung zu beaufschlagen. Alternativ dazu kann aber auch vorgesehen sein, für jede der Spuren SP1 bis SP5 eine eigene Bestrahlungseinrichtung 11 und ggf. 11' vorzusehen.

Für die Anregung, Erfassung und Prüfung der vom Messobjekt 1 bis 4 ausgehenden optischen Strahlung gelten die vorstehenden Ausführungen im Zusammenhang mit den Figuren 1 bis 4 entsprechend.

Das Sensorsystem 10 kann hinsichtlich der zu messenden Eigenschaften (z.B. Lumineszenz, Raman-Streuung, insbesondere SERS, Absorption), Anzahl der Spuren SP1 bis SP5 und/oder Anzahl der Spektralkanäle K1, K2, ... unterschiedlich ausgestaltet sein, wobei nachfolgend beispielhaft einige bevorzugte Ausführungen beschrieben werden, die auch verschiedene Möglichkeiten zur Realisierung einer geringeren bzw. höheren Spezifität bei der Erfassung bzw. Prüfung der optischen Strahlung im ersten und zweiten Betriebsmodus zeigen.

So kann das Sensorsystem 10 als Lumineszenz-Einspursensor mit nur einem Spektralkanal ausgestaltet sein. Dabei kann insbesondere vorgesehen sein, dass im ersten Betriebsmodus (Cleanmode) keine Abklingzeitprüfung erfolgt (Prüfung ist unspezifisch bezüglich Abklingzeit) und/oder im zweiten Betriebsmodus (Messmode) nur Signale mit passender Abklingzeit berücksichtigt werden (Prüfung ist spezifisch bzw. selektiv bezüglich Abklingzeit).

Das Sensorsystem 10 kann auch als Lumineszenz-Einspursensor mit 10 Spektralkanälen ausgestaltet sein. Vorzugsweise wird dabei im Cleanmode spektral breitbandig gemessen bzw. geprüft, wobei die Summe der Intensitäten über alle Spektralkanäle gebildet und/oder ein (Intensitäts-)Maximum aus allen Spektralkanälen ermittelt wird (Prüfung ist unspezifisch bezüglich der Spektralkanäle). Im Messmode werden dagegen nur Signale gemessen bzw. geprüft, die spektral identifiziert wurden (Prüfung ist spezifisch bzw. selektiv bezüglich der Spektralkanäle).

Ferner kann das Sensorsystem 10 als Lumineszenz-5-Spur-Sensor mit 5 Spektralkanälen ausgestaltet sein, wobei im Cleanmode spektral breitbandig (Summe der Signale mehrerer Spektralkanäle und/oder Maximum aus allen Spuren) gemessen bzw. geprüft wird (Prüfung ist unspezifisch bezüglich der Spektralkanäle und/oder Spuren), wohingegen im Messmode nur Signale berücksichtigt werden, die spektral identifiziert wurden und in vorgegebenen bzw. bestimmten Spuren (Prüfung ist spezifisch bzw. selektiv bezüglich der Spektralkanäle bzw. Spuren) auftreten.

Das Sensorsystem 10 kann auch als Lumineszenz-6-Spur-Sensor mit 5 Spektralkanälen ausgestaltet sein, wobei im Cleanmode spektral breitbandig (Maximum aller Spektralkanäle und/oder Maximum aus allen Spuren ohne zeitliche Prüfung) gemessen bzw. geprüft wird (Prüfung ist unspezifisch bezüglich der Spektralkanäle, Spuren bzw. des Zeitverhaltens). Im Messmode werden nur Signale berücksichtigt, die spektral und anhand des Zeitverhaltens identifiziert wurden (Prüfung ist spezifisch bzw. selektiv bezüglich der Spektralkanäle und des Zeitverhaltens).

Ferner kann das Sensorsystem 10 als Lumineszenz-10-Spur-Sensor mit einem Spektralkanal ausgestaltet sein, wobei im Cleanmode das Maximum über alle Spuren ohne zeitliche Prüfung herangezogen wird (Prüfung ist unspezifisch bezüglich der Spuren und des Zeitverhaltens), wohingegen im Messmode nur Signale herangezogen werden, die anhand des Zeitverhaltens identifiziert wurden und in den richtigen Spuren auftreten (Prüfung ist spezifisch bzw. selektiv bezüglich der Spuren und des Zeitverhaltens).

Das Sensorsystem 10 kann auch als SERS-Einspursensor mit 1000 Spektralkanälen ausgestaltet sein, wobei im Cleanmode die Summe über alle Spektralkanäle berücksichtigt wird, wohingegen im Messmode nur Signale in spezifischen Spektralbereichen berücksichtigt werden.

Ferner kann das Sensorsystem 10 als SERS-Einspursensor mit 100 Spektralkanälen ausgestaltet sein, wobei im Cleanmode die Summe über spezifische Spektralkanalbereiche berücksichtigt wird (z.B. Kanal 7-34 und 48-61, davon das Maximum), wohingegen im Messmode nur Signale in spezifischen engeren Spektralbereichen (z.B. Kanäle 9-12 und 21-30) berücksichtigt werden.

Das Sensorsystem 10 kann auch als SERS-Einspursensor mit 16 Spektralkanälen ausgestaltet sein, wobei im Cleanmode die Summe über alle Spektralkanäle berücksichtigt wird, wohingegen im Messmode nur Signale in spezifischen Spektralbereichen (z.B. Kanäle 5-7 und 9) berücksichtigt werden.

Darüber hinaus kann das Sensorsystem 10 als SERS 2-Spursensor mit 256 Spektralkanälen ausgestaltet sein, wobei im Cleanmode die Summe über spezifische Spektralkanalbereiche (z.B. Kanal 17-134 und 150-200, davon das Maximum; Maximum der Spuren) berücksichtigt wird, wohingegen im Messmode nur Signale in spezifischen engeren Spektralbereichen (z.B. Kanäle 59-82 und 180-192) berücksichtigt werden.

Das Sensorsystem 10 kann auch als Einspursensor zur Bestimmung von Absorptionseigenschaften mittels Remissionsmessung mit 64 Spektralkanälen ausgestaltet sein, wobei im Cleanmode spektral breitbandig (Maximum aller Spektralkanäle) gemessen bzw. geprüft wird, wohingegen im Messmode nur Signale berücksichtigt werden, die spektral identifiziert wurden.

Ferner kann das Sensorsystem 10 als 8-Spur-Sensor zur Bestimmung von Absorptionseigenschaften mittels Remissionsmessung mit 30 Spektralkanälen ausgestaltet sein, wobei im Cleanmode spektral breitbandig (Maximum aus allen Spektralkanälen und/oder Mittelwert aus allen Spuren) gemessen bzw. geprüft wird, wohingegen im Messmode nur Signale berücksichtigt werden, die spektral identifiziert wurden.

## Patentansprüche

1. Verfahren zur Herstellung von Wertdokumenten, insbesondere Banknoten, mit folgenden Schritten:
- Bereitstellen mindestens eines ersten Halbzeugs (1),
- Erfassen einer vom ersten Halbzeug (1) ausgehenden ersten optischen Strahlung (S1) mit mindestens einer ersten Empfindlichkeit (E1) und mindestens einer ersten Auflösung (A1) zeitlicher, räumlicher und/oder spektraler Eigenschaften der ersten optischen Strahlung (S1), und
- Prüfen der ersten optischen Strahlung (S1) anhand eines ersten Prüfkriteriums (K1) und, wenn das erste Prüfkriterium (K1) erfüllt ist,
- Einbringen und/oder Aufbringen mindestens eines Merkmalsstoffes (MS) in bzw. auf das erste Halbzeug (1), wobei ein Wertdokument (4) oder ein zweites Halbzeug (2), welches zur Herstellung eines Wertdokuments (4) verwendbar ist, erhalten wird, in dem der Merkmalsstoff (MS) für das bloße Auge unsichtbar ist,
- Erfassen einer vom Wertdokument (4) bzw. zweiten Halbzeug (2) ausgehenden zweiten optischen Strahlung (S2) mit mindestens einer zweiten Empfindlichkeit (E2) und mindestens einer zweiten Auflösung (A2) zeitlicher, räumlicher und/oder spektraler Eigenschaften der zweiten optischen Strahlung (S2) und
- Prüfen der zweiten optischen Strahlung (S2) anhand mindestens eines zweiten Prüfkriteriums (K2a, K2b) und, wenn das mindestens eine zweite Prüfkriterium (K2a, K2b) erfüllt ist, Freigeben des Wertdokuments (4) für den Umlauf bzw. Freigeben des zweiten Halbzeugs (2) zur Verwendung bei der Herstellung eines Wertdokuments (4),
wobei
- die erste Empfindlichkeit (E1) größer ist als die zweite Empfindlichkeit (E2) und/oder
- die erste Auflösung (A1) kleiner ist als die zweite Auflösung (A2) und/oder
- das Prüfen der ersten optischen Strahlung (S1) hinsichtlich der zeitlichen, räumlichen und/oder spektralen Eigenschaften der ersten optischen Strahlung (S1) weniger selektiv ist als das Prüfen der zweiten optischen Strahlung (S2) hinsichtlich der zeitlichen, räumlichen bzw. spektralen Eigenschaften der zweiten optischen Strahlung (S2).

2. Verfahren nach Anspruch 1, wobei anhand des mindestens einen ersten Prüfkriteriums (K1) geprüft wird, ob eine Intensität der ersten optischen Strahlung (S1) kleiner ist als ein vorgegebener erster Schwellenwert (R1) oder ob eine Differenz von zwei gemessenen Intensitäten der ersten optischen Strahlung, beispielsweise von zwei Intensitäten bei verschiedenen Detektionswellenlängen, unterhalb eines vorgegebenen ersten Schwellenwerts liegt.

3. Verfahren nach einem der vorangehenden Ansprüche, wobei anhand des mindestens einen ersten Prüfkriteriums (K1), insbesondere anhand des vorgegebenen ersten Schwellenwerts (R1), das erste Halbzeug im Hinblick auf Verunreinigungen geprüft wird, z.B. im Hinblick darauf, ob der Einfluss der Verunreinigungen auf die erste optische Strahlung akzeptabel gering ist.

4. Verfahren nach einem der vorhergehenden Ansprüche, wobei anhand der zweiten optischen Strahlung (S2) mindestens eine charakteristische Eigenschaft des in bzw. auf das Wertdokument (4) bzw. zweite Halbzeug (2) eingebrachten bzw. aufgebrachten Merkmalsstoffes (MS) ermittelt wird.

5. Verfahren nach einem der vorhergehenden Ansprüche, wobei in einem ersten Prüfungsschritt anhand des mindestens einen zweiten Prüfkriteriums (K2a) geprüft wird, ob die ermittelte charakteristische Eigenschaft des Merkmalsstoffes (MS) mit einer vorgegebenen Eigenschaft (R) übereinstimmt oder zumindest dazu ähnlich ist, insbesondere, ob es sich bei dem eingebrachten bzw. aufgebrachten Merkmalsstoff um den gewünschten Merkmalsstoff handelt.

6. Verfahren nach einem der vorangehenden Ansprüche, wobei in einem zweiten Prüfungsschritt anhand des mindestens einen zweiten Prüfkriteriums (K2b) geprüft wird, ob eine Intensität der zweiten optischen Strahlung (S2) größer ist als ein vorgegebener zweiter Schwellenwert (R2) und/oder innerhalb eines vorgegebenen Toleranzintervalls liegt, wobei anhand des vorgegebenen zweiten Schwellenwerts (R2) bzw. des vorgegebenen Toleranzintervalls insbesondere geprüft wird, ob der Merkmalsstoff in der gewünschten Menge in/auf dem zweiten Halbzeug bzw. Wertdokument vorhanden ist.

7. Verfahren nach Anspruch 5 und 6, wobei der zweite Prüfungsschritt nach dem ersten Prüfungsschritt durchgeführt wird und/oder nur dann durchgeführt wird, wenn das mindestens eine zweite Prüfkriterium (K2a) im ersten Prüfungsschritt erfüllt wird.

8. Verfahren nach einem der vorangehenden Ansprüche, wobei die erfasste erste und/oder zweite optische Strahlung (S1, S2) charakteristisch für zumindest eine der folgenden optischen Eigenschaften des ersten Halbzeugs (1) und/oder Wertdokuments (4) bzw. zweiten Halbzeugs (2) ist: Lumineszenz, Raman-Streuung, insbesondere oberflächenverstärkte Raman-Streuung (SERS), und/oder Absorption.

9. Verfahren nach einem der vorangehenden Ansprüche, wobei die erfasste erste und zweite optische Strahlung (S1, S2) für dieselbe optische Eigenschaft, insbesondere beide für Lumineszenz, Raman-Streuung, oberflächenverstärkte Raman-Streuung (SERS) oder Absorption, des ersten Halbzeugs (1) und Wertdokuments (4) bzw. zweiten Halbzeugs (2) charakteristisch sind, und/oder wobei das Erfassen der ersten optischen Strahlung am ersten Halbzeug und das Erfassen der zweiten optischen Strahlung am zweiten Halbzeug bzw. Wertdokument durch dieselbe optische Messmethode erfolgt, insbesondere durch Messung der Lumineszenz oder durch Messung der Raman-Streuung, insbesondere oberflächenverstärkte Raman-Streuung (SERS) oder durch Messung der Absorption.

10. Verfahren nach einem der vorangehenden Ansprüche, wobei das erste Halbzeug (1)
- ein Wertdokument-Substrat (3) ist, in und/oder auf welches der Merkmalsstoff (MS), insbesondere mittels eines Druckvorgangs, ein- bzw. aufgebracht wird, um das Wertdokument (4) zu erhalten, und/oder
- eine Druckfarbe ist, in welche der Merkmalsstoff (MS) eingebracht wird, um das zweite Halbzeug (2) in Form einer den Merkmalsstoff enthaltenden Druckfarbe zu erhalten, mittels welcher ein Wertdokument-Substrat (3) bedruckt werden kann, und/oder
- eine Papier-Pulpe ist, in welche der Merkmalsstoff (MS) eingebracht wird, um das zweite Halbzeug (2), insbesondere in Form eines Wertdokument-Substrats (3), zu erhalten, und/oder
- eine Polymer-Schmelze ist, in welche der Merkmalsstoff (MS) eingebracht wird, um das zweite Halbzeug (2), insbesondere in Form eines Polymer-Substrats und/oder eines Folienstreifens zum Einbringen und/oder Aufbringen in bzw. auf ein Wertdokument-Substrat (3), zu erhalten.

11. Verfahren nach einem der vorangehenden Ansprüche, wobei zum Erfassen und Prüfen der zweiten optischen Strahlung (S2) ein baugleicher Sensoi,- oder derselbe Sensor verwendet wird wie zum Erfassen und Prüfen der ersten optischen Strahlung (S1).

12. Sensorsystem (10) zur Qualitätsprüfung bei der Herstellung von Wertdokumenten, bei welcher in und/ oder auf ein erstes Halbzeug (1) mindestens ein Merkmalsstoff (MS) eingebracht bzw. aufgebracht wird, um ein Wertdokument (4) oder ein zweites Halbzeug (2), welches zur Herstellung eines Wertdokuments (4) verwendbar ist, zu erhalten, wobei das Sensorsystem (10) mindestens eine Erfassungsvorrichtung (11, 12) zur Erfassung von optischer Strahlung (S1, S2) und mindestens eine Prüfvorrichtung (13) zur Prüfung der erfassten optischen Strahlung (S1, S2) aufweist und in einem ersten Betriebsmodus (B1) und in einem zweiten Betriebsmodus (B2) betreibbar ist, wobei
- im ersten Betriebsmodus (B1) die mindestens eine Erfassungsvorrichtung (11, 12) eine vom ersten Halbzeug (1) ausgehende erste optische Strahlung (S1) mit mindestens einer ersten Empfindlichkeit (E1) und mindestens einer ersten Auflösung (A1) zeitlicher, räumlicher und/oder spektraler Eigenschaften der ersten optischen Strahlung (S1) erfasst, und die mindestens eine Prüfvorrichtung (13) die erste optische Strahlung (S1) anhand eines ersten Prüfkriteriums (K1) prüft und ein erstes Prüfsignal erzeugt und/ oder ausgibt, welches davon abhängig ist, ob das erste Prüfkriterium (K1) erfüllt ist, und
- im zweiten Betriebsmodus (B2) die mindestens eine Erfassungsvorrichtung (11, 12) eine vom Wertdokument (4) bzw. vom zweiten Halbzeug (2) ausgehende zweite optische Strahlung (S2) mit mindestens einer zweiten Empfindlichkeit (E2) und mindestens einer zweiten Auflösung (A2) zeitlicher, räumlicher und/ oder spektraler Eigenschaften der zweiten optischen Strahlung (S2) erfasst, und die mindestens eine Prüfvorrichtung (13) die zweite optische Strahlung (S2) anhand mindestens eines zweiten Prüfkriteriums (K2a, K2b) prüft und ein zweites Prüfsignal erzeugt und/oder ausgibt, welches davon abhängt, ob das mindestens eine zweite Prüfkriterium (K2a, K2b) erfüllt ist,
und wobei
- die erste Empfindlichkeit (E1) größer ist als die zweite Empfindlichkeit (E2) und/oder
- die erste Auflösung (A1) kleiner ist als die zweite Auflösung (A2) und/oder
- das Prüfen der ersten optischen Strahlung (S1) hinsichtlich der zeitlichen, räumlichen und/oder spektralen Eigenschaften der ersten optischen Strahlung (S1) weniger selektiv ist als das Prüfen der zweiten optischen Strahlung (S2) hinsichtlich der zeitlichen, räumlichen bzw. spektralen Eigenschaften der zweiten optischen Strahlung (S2).

13. Sensorsystem (10) nach Anspruch 12, wobei das Sensorsystem (10) so eingerichtet ist, dass es sich unmittelbar nach einer Aktivierung, insbesondere nach einem Einschalten oder einer Inbetriebnahme, im ersten Betriebsmodus (B1) befindet und/oder dass es durch eine Bedienperson vom ersten Betriebsmodus (B1) in den zweiten Betriebsmodus (B2) umgeschaltet werden kann.

14. Sensorsystem (10) nach Anspruch 12 oder 13, wobei die mindestens eine Erfassungsvorrichtung (11, 12) aufweist:
- eine Bestrahlungseinrichtung (11), welche dazu eingerichtet ist, eine dritte optische Strahlung (S3) zu erzeugen und im ersten Betriebsmodus (B1) das erste Halbzeug (1) und im zweiten Betriebsmodus (B2) das Wertdokument (4) bzw. zweite Halbzeug (2) mit der dritten optischen Strahlung (S3) zu beaufschlagen, und
- mindestens eine Detektoreinrichtung (12), welche dazu eingerichtet ist, die in Antwort auf die Beaufschlagung mit der dritten optischen Strahlung (S3) vom ersten Halbzeug (1) ausgehende erste optische Strahlung (S1) bzw. vom Wertdokument (4) bzw. zweiten Halbzeug (2) ausgehende zweite optische Strahlung (S2) zu erfassen.

15. Sensorsystem nach Anspruch 12 oder 13, wobei die mindestens eine Erfassungsvorrichtung (11, 11', 12) aufweist:
- eine erste Bestrahlungseinrichtung (11), welche dazu eingerichtet ist, eine dritte optische Strahlung (S3) zu erzeugen und im ersten Betriebsmodus (B1) das erste Halbzeug (1) mit der dritten optischen Strahlung (S1) zu beaufschlagen,
- eine zweite Bestrahlungseinrichtung (11'), welche dazu eingerichtet ist, eine vierte optische Strahlung (S4) zu erzeugen, welche von der dritten optischen Strahlung (S3) verschieden ist, und im zweiten Betriebsmodus (B2) das Wertdokument (4) bzw. zweite Halbzeug (2) mit der vierten optischen Strahlung (S4) zu beaufschlagen, und
- mindestens eine Detektoreinrichtung (12), welche dazu eingerichtet ist, die in Antwort auf die Beaufschlagung mit der dritten optischen Strahlung (S3) vom ersten Halbzeug (1) ausgehende erste optische Strahlung (S1) bzw. die in Antwort auf die Beaufschlagung mit der vierten optischen Strahlung (S4) vom Wertdokument (4) bzw. zweiten Halbzeug (2) ausgehende zweite optische Strahlung (S2) zu erfassen,
wobei die dritte optische Strahlung (S3) insbesondere eine höhere Intensität und/oder ein breiteres Spektrum und/oder eine größere Anzahl unterschiedlicher spektraler Komponenten aufweist als die vierte optische Strahlung (S4).

## Claims

1. Method for producing value documents, in particular banknotes, comprising the following steps:
- providing at least one first semifinished product (1),
- capturing a first optical radiation (S1) emanating from the first semifinished product (1) with at least one first sensitivity (E1) and at least one first resolution (A1) of temporal, spatial and/or spectral properties of the first optical radiation (S1), and
- testing the first optical radiation (S1) on the basis of a first test criterion (K1) and, if the first test criterion (K1) is satisfied,
- introducing and/or applying at least one feature substance (MS) into and/or onto the first semifinished product (1), wherein a value document (4) or a second semifinished product (2) usable for producing a value document (4) is obtained in which the feature substance (MS) is invisible to the naked eye,
- capturing a second optical radiation (S2) emanating from the value document (4) or the second semifinished product (2) with at least one second sensitivity (E2) and at least one second resolution (A2) of temporal, spatial and/or spectral properties of the second optical radiation (S2), and
- testing the second optical radiation (S2) on the basis of at least one second test criterion (K2a, K2b) and, if the at least one second test criterion (K2a, K2b) is satisfied, releasing the value document (4) for circulation or releasing the second semifinished product (2) for use in the production of a value document (4),
wherein
- the first sensitivity (E1) is greater than the second sensitivity (E2) and/or
- the first resolution (A1) is less than the second resolution (A2) and/or
- the testing of the first optical radiation (S1) with regard to the temporal, spatial and/or spectral properties of the first optical radiation (S1) is less selective than the testing of the second optical radiation (S2) with regard to the temporal, spatial and/or spectral properties of the second optical radiation (S2).

2. Method according to Claim 1, wherein on the basis of the at least one first test criterion (K1), a test is conducted to check whether an intensity of the first optical radiation (S1) is less than a predefined first threshold value (R1) or whether a difference between two measured intensities of the first optical radiation, for example two intensities at different detection wavelengths, lies below a predefined first threshold value.

3. Method according to either of the preceding claims, wherein on the basis of the at least one first test criterion (K1), in particular on the basis of the predefined first threshold value (R1), the first semifinished product is tested in regard to contaminants, e.g. in regard to whether the influence of the contaminants on the first optical radiation is acceptably small.

4. Method according to any of the preceding claims, wherein on the basis of the second optical radiation (S2), at least one characteristic property of the feature substance (MS) introduced into and/or applied onto the value document (4) or the second semifinished product (2) is ascertained.

5. Method according to any of the preceding claims, wherein in a first test step on the basis of the at least one second test criterion (K2a), a test is conducted to check whether the ascertained characteristic property of the feature substance (MS) corresponds to a predefined property (R) or is at least similar thereto, in particular whether the introduced and/or applied feature substance is the desired feature substance.

6. Method according to any of the preceding claims, wherein in a second test step on the basis of the at least one second test criterion (K2b), a test is conducted to check whether an intensity of the second optical radiation (S2) is greater than a predefined second threshold value (R2) and/or lies within a predefined tolerance interval, wherein on the basis of the predefined second threshold value (R2) and/or the predefined tolerance interval, in particular a test is conducted to check whether the feature substance is present in the desired amount in/on the second semifinished product or the value document.

7. Method according to Claims 5 and 6, wherein the second test step is carried out after the first test step and/or is carried out only if the at least one second test criterion (K2a) is satisfied in the first test step.

8. Method according to any of the preceding claims, wherein the captured first and/or second optical radiation (S1, S2) are/is characteristic of at least one of the following optical properties of the first semifinished product (1) and/or the value document (4) or the second semifinished product (2): luminescence, Raman scattering, in particular surface-enhanced Raman scattering (SERS), and/or absorption.

9. Method according to any of the preceding claims, wherein the captured first and second optical radiation (S1, S2) are characteristic of the same optical property, in particular both characteristic of luminescence, Raman scattering, surface-enhanced Raman scattering (SERS) or absorption, of the first semifinished product (1) and the value document (4) or the second semifinished product (2), and/or wherein capturing the first optical radiation at the first semifinished product and capturing the second optical radiation at the second semifinished product or the value document are effected by the same optical measurement method, in particular by measurement of the luminescence or by measurement of the Raman scattering, in particular surface-enhanced Raman scattering (SERS), or by measurement of the absorption.

10. Method according to any of the preceding claims, wherein the first semifinished product (1)
- is a value document substrate (3), into and/or onto which the feature substance (MS) is introduced and/or applied, in particular by means of a printing process, in order to obtain the value document (4), and/or
- is a printing ink, into which the feature substance (MS) is introduced in order to obtain the second semifinished product (2) in the form of a printing ink which contains the feature substance and by means of which a value document substrate (3) can be printed, and/or
- is a paper pulp, into which the feature substance (MS) is introduced in order to obtain the second semifinished product (2), in particular in the form of a value document substrate (3), and/or
- is a polymer melt, into which the feature substance (MS) is introduced in order to obtain the second semifinished product (2), in particular in the form of a polymer substrate and/or a film strip, for introduction into and/or application onto a value document substrate (3).

11. Method according to any of the preceding claims, wherein a sensor used for capturing and testing the second optical radiation (S2) is structurally identical to or the same as that used for capturing and testing the first optical radiation (S1).

12. Sensor system (10) for quality control during the production of value documents which involves at least one feature substance (MS) being introduced into and/or applied onto a first semifinished product (1) in order to obtain a value document (4) or a second semifinished product (2) usable for producing a value document (4), wherein the sensor system (10) comprises at least one capture apparatus (11, 12) for capturing optical radiation (S1, S2) and at least one test apparatus (13) for testing the captured optical radiation (S1, S2) and is operable in a first operating mode (B1) and in a second operating mode (B2), wherein
- in the first operating mode (B1) the at least one capture apparatus (11, 12) captures a first optical radiation (S1) emanating from the first semifinished product (1) with at least one first sensitivity (E1) and at least one first resolution (A1) of temporal, spatial and/or spectral properties of the first optical radiation (S1), and the at least one test apparatus (13) tests the first optical radiation (S1) on the basis of a first test criterion (K1) and generates and/or outputs a first test signal, which is dependent on whether the first test criterion (K1) is satisfied, and
- in the second operating mode (B2) the at least one capture apparatus (11, 12) captures a second optical radiation (S2) emanating from the value document (4) or from the second semifinished product (2) with at least one second sensitivity (E2) and at least one second resolution (A2) of temporal, spatial and/or spectral properties of the second optical radiation (S2), and the at least one test apparatus (13) tests the second optical radiation (S2) on the basis of at least one second test criterion (K2a, K2b) and generates and/or outputs a second test signal, which is dependent on whether the at least one second test criterion (K2a, K2b) is satisfied, and wherein
- the first sensitivity (E1) is greater than the second sensitivity (E2) and/or
- the first resolution (A1) is less than the second resolution (A2) and/or
- the testing of the first optical radiation (S1) with regard to the temporal, spatial and/or spectral properties of the first optical radiation (S1) is less selective than the testing of the second optical radiation (S2) with regard to the temporal, spatial and/or spectral properties of the second optical radiation (S2).

13. Sensor system (10) according to Claim 12, wherein the sensor system (10) is configured such that it is in the first operating mode (B1) directly after activation, in particular after switching on or start-up, and/or that it can be switched from the first operating mode (B1) to the second operating mode (B2) by an operator.

14. Sensor system (10) according to Claim 12 or 13, wherein the at least one capture apparatus (11, 12) comprises:
- an irradiation device (11) configured to generate a third optical radiation (S3) and to cause the third optical radiation (S3) to impinge on the first semifinished product (1) in the first operating mode (B1) and on the value document (4) or the second semifinished product (2) in the second operating mode (B2), and
- at least one detector device (12) configured to capture the first optical radiation (S1) emanating from the first semifinished product (1) and respectively the second optical radiation (S2) emanating from the value document (4) or the second semifinished product (2) in response to their being impinged on by the third optical radiation (S3).

15. Sensor system according to Claim 12 or 13, wherein the at least one capture apparatus (11, 11', 12) comprises:
- a first irradiation device (11) configured to generate a third optical radiation (S3) and to cause the third optical radiation (S1) to impinge on the first semifinished product (1) in the first operating mode (B1),
- a second irradiation device (11') configured to generate a fourth optical radiation (S4), which is different than the third optical radiation (S3), and to cause the fourth optical radiation (S4) to impinge on the value document (4) or the second semifinished product (2) in the second operating mode (B2), and
- at least one detector device (12) configured to capture the first optical radiation (S1) emanating from the first semifinished product (1) in response to its being impinged on by the third optical radiation (S3) and respectively the second optical radiation (S2) emanating from the value document (4) or the second semifinished product (2) in response to its being impinged on by the fourth optical radiation (S4),
wherein the third optical radiation (S3) has in particular a higher intensity and/or a broader spectrum and/or a greater number of different spectral components than the fourth optical radiation (S4).

## Revendications

1. Procédé de fabrication de documents de valeur, en particulier de billets de banque, présentant les étapes suivantes :
- mise à disposition d'au moins un premier produit semi-fini (1),
- détection d'un premier rayonnement optique (S1) partant du premier produit semi-fini (1) à au moins une première sensibilité (E1) et à au moins une première résolution (A1) de propriétés temporelles, spatiales et/ou spectrales du premier rayonnement optique (S1) et
- test du premier rayonnement optique (S1) à l'aide d'un premier critère de test (K1) et, lorsque le premier critère de test (K1) est respecté,
- introduction et/ou application d'au moins une substance aux caractéristiques distinctes (MS) dans ou, selon le cas, sur le premier produit semi-fini (1), un document de valeur (4) ou un second produit semi-fini (2), qui peut être utilisé pour la fabrication d'un document de valeur (4), étant obtenu dans lequel la substance aux caractéristiques distinctes (MS) est invisible à l'œil nu,
- détection d'un deuxième rayonnement optique (S2) partant du document de valeur (4) ou, selon le cas, du second produit semi-fini (2) à au moins une seconde sensibilité (E2) et à au moins une seconde résolution (A2) de propriétés temporelles, spatiales et/ou spectrales du deuxième rayonnement optique (S2) et
- test du deuxième rayonnement optique (S2) à l'aide d'au moins un second critère de test (K2a, K2b) et, lorsque ledit au moins un second critère de test (K2a, K2b) est respecté, autorisation du document de valeur (4) pour la mise en circulation ou, selon le cas, autorisation du second produit semi-fini (2) pour une utilisation lors de la fabrication d'un document de valeur (4),
dans lequel
- la première sensibilité (E1) est supérieure à la seconde sensibilité (E2) et/ou
- la première résolution (A1) est inférieure à la seconde résolution (A2) et/ou
- le test du premier rayonnement optique (S1) est moins sélectif, en ce qui concerne les propriétés temporelles, spatiales et/ou spectrales du premier rayonnement optique (S1), que le test du deuxième rayonnement optique (S2) en ce qui concerne les propriétés temporelles, spatiales ou, selon le cas, spectrales du deuxième rayonnement optique (S2).

2. Procédé selon la revendication 1, dans lequel, à l'aide dudit au moins un premier critère de test (K1), on teste si une intensité du premier rayonnement optique (S1) est inférieure à une première valeur seuil (R1) spécifiée ou si une différence entre deux intensités mesurées du premier rayonnement optique, par exemple entre deux intensités à des longueurs d'onde de détection différentes, se situe en dessous d'une première valeur seuil spécifiée.

3. Procédé selon l'une des revendications précédentes, dans lequel, à l'aide dudit au moins un premier critère de test (K1), en particulier à l'aide de la première valeur seuil (R1) spécifiée, on teste le premier produit semi-fini en ce qui concerne des impuretés, par exemple en ce qui concerne le fait que l'influence des impuretés sur le premier rayonnement optique est d'un niveau bas acceptable.

4. Procédé selon l'une des revendications précédentes, dans lequel, à l'aide du deuxième rayonnement optique (S2), on détermine au moins une propriété caractéristique de la substance aux caractéristiques distinctes (MS) introduite dans ou, selon le cas, appliquée sur le document de valeur (4) ou, selon le cas, le second produit semi-fini (2).

5. Procédé selon l'une des revendications précédentes, dans lequel, dans une première étape de test, on teste à l'aide dudit au moins un second critère de test (K2a) si la propriété caractéristique déterminée de la substance aux caractéristiques distinctes (MS) correspond à une propriété (R) spécifiée ou est au moins analogue à celle-ci, en particulier, s'il s'agit, pour la substance aux caractéristiques distinctes introduite ou, selon le cas, appliquée, de la substance aux caractéristiques distinctes souhaitée.

6. Procédé selon l'une des revendications précédentes, dans lequel, dans une seconde étape de test, on teste à l'aide dudit au moins second critère de test (K2b) si une intensité du deuxième rayonnement optique (S2) est supérieure à une seconde valeur seuil (R2) spécifiée et/ou se situe dans un intervalle de tolérance spécifié, dans lequel on teste en particulier, à l'aide de la seconde valeur seuil (R2) spécifiée ou de l'intervalle de tolérance spécifié, si la substance aux caractéristiques distinctes est présente en la quantité souhaitée dans/sur le second produit semi-fini ou, selon le cas, le document de valeur.

7. Procédé selon la revendication 5 et 6, dans lequel la seconde étape de test est mise en œuvre après la première étape de test et/ou est uniquement mise en œuvre lorsque ledit au moins un second critère de test (K2a) est respecté dans la première étape de test.

8. Procédé selon l'une des revendications précédentes, dans lequel le premier et/ou le deuxième rayonnement optique (S1, S2) détecté(s) est caractéristique pour au moins l'une des propriétés optiques suivantes du premier produit semi-fini (1) et/ou du document de valeur (4) ou, selon le cas, du second produit semi-fini (2) : luminescence, diffusion Raman, en particulier diffusion Raman exaltée de surface (SERS) et/ou absorption.

9. Procédé selon l'une des revendications précédentes, dans lequel le premier et le deuxième rayonnement optique (S1, S2) détectés sont caractéristiques pour la même propriété optique, en particulier tous les deux pour la luminescence, la diffusion Raman, la diffusion Raman exaltée de surface (SERS) ou l'absorption, du premier produit semi-fini (1) et du document de valeur (4) ou, selon le cas, du second produit semi-fini (2) et/ou dans lequel la détection du premier rayonnement optique sur le premier produit semi-fini et la détection du deuxième rayonnement optique sur le second produit semi-fini ou, selon le cas, sur le document de valeur s'effectuent par la même méthode de mesure optique, en particulier par mesure de la luminescence ou par mesure de la diffusion Raman, en particulier la diffusion Raman exaltée de surface (SERS) ou par mesure de l'absorption.

10. Procédé selon l'une des revendications précédentes, dans lequel le premier produit semi-fini (1)
- est un substrat (3) de document de valeur, dans et/ou sur lequel la substance aux caractéristiques distinctes (MS) est introduite ou, selon le cas, appliquée en particulier au moyen d'un processus d'impression afin d'obtenir le document de valeur (4) et/ou
- est une encre d'impression, dans laquelle la substance aux caractéristiques distinctes (MS) est introduite afin d'obtenir le second produit semi-fini (2) sous la forme d'une encre d'impression contenant la substance aux caractéristiques distinctes, au moyen de laquelle un substrat (3) de document de valeur peut être imprimé et/ou
- est une pâte à papier, dans laquelle la substance aux caractéristiques distinctes (MS) est introduite afin d'obtenir le second produit semi-fini (2), en particulier sous la forme d'un substrat (3) de document de valeur et/ou
- est une masse fondue de polymère, dans laquelle la substance aux caractéristiques distinctes (MS) est introduite afin d'obtenir le second produit semi-fini (2), en particulier sous la forme d'un substrat polymère et/ou d'une bande de feuille destiné(e)(s) à être introduit(e) (s) et/ou appliqué(e) (s) dans ou, selon le cas, sur un substrat (3) de document de valeur.

11. Procédé selon l'une des revendications précédentes, dans lequel on utilise, pour la détection et le test du deuxième rayonnement optique (S2), un capteur identique à ou le même capteur que celui pour la détection et le test du premier rayonnement optique (S1).

12. Système capteur (10) pour le test de qualité lors de la fabrication de documents de valeur, dans lequel au moins une substance aux caractéristiques distinctes (MS) est introduite ou, selon le cas, appliquée dans et/ou sur un premier produit semi-fini (1) afin d'obtenir un document de valeur (4) ou un second produit semi-fini (2), qui peut être utilisé pour la fabrication d'un document de valeur (4), le système capteur (10) présentant au moins un dispositif de détection (11, 12) pour la détection d'un rayonnement optique (S1, S2) et au moins un dispositif de test (13) pour le test du rayonnement optique (S1, S2) détecté et - pouvant fonctionner dans un premier mode de fonctionnement (B1) et dans un second mode de fonctionnement (B2), dans lequel
- dans le premier mode de fonctionnement (B1), ledit au moins un dispositif de détection (11, 12) détecte un premier rayonnement optique (S1) partant du premier produit semi-fini (1) à au moins une première sensibilité (E1) et à au moins une première résolution (A1) de propriétés temporelles, spatiales et/ou spectrales du premier rayonnement optique (S1) et ledit au moins un dispositif de test (13) teste le premier rayonnement optique (S1) à l'aide d'un premier critère de test (K1) et génère et/ou émet un premier signal de test, qui dépend du respect ou non du premier critère de test (K1) et
- dans le second mode de fonctionnement (B2), ledit au moins un dispositif de détection (11, 12) détecte un deuxième rayonnement optique (S2) partant du document de valeur (4) ou, selon le cas, du second produit semi-fini (2) à au moins une seconde sensibilité (E2) et à au moins une seconde résolution (A2) de propriétés temporelles, spatiales et/ou spectrales du deuxième rayonnement optique (S2) et ledit au moins un dispositif de test (13) teste le deuxième rayonnement optique (S2) à l'aide d'au moins un second critère de test (K2a, K2b) et génère et/ou émet un second signal de test, qui dépend du respect ou non du second critère de test (K2a, K2b),
et dans lequel
- la première sensibilité (E1) est supérieure à la seconde sensibilité (E2) et/ou
- la première résolution (A1) est inférieure à la seconde résolution (A2) et/ou
- le test du premier rayonnement optique (S1) est moins sélectif, en ce qui concerne les propriétés temporelles, spatiales et/ou spectrales du premier rayonnement optique (S1), que le test du deuxième rayonnement optique (S2) en ce qui concerne les propriétés temporelles, spatiales ou, selon le cas, spectrales du deuxième rayonnement optique (S2).

13. Système capteur (10) selon la revendication 12, dans lequel le système capteur (10) est conçu de telle sorte que, directement après une activation, en particulier après une mise en marche ou une mise en service, il se trouve dans le premier mode de fonctionnement (B1) et/ou il peut être commuté par un opérateur à partir du premier mode de fonctionnement (B1) dans le second mode de fonctionnement (B2).

14. Système capteur (10) selon la revendication 12 ou 13, dans lequel ledit au moins un dispositif de détection (11, 12) présente :
- un équipement de rayonnement (11), qui est conçu pour générer un troisième rayonnement optique (S3) et pour soumettre, dans le premier mode de fonctionnement (B1), le premier produit semi-fini (1) et, dans le second mode de fonctionnement (B2), le document de valeur (4) ou, selon le cas, le second produit semi-fini (2) au troisième rayonnement optique (S3) et
- au moins un équipement de détection (12), qui est conçu pour détecter, en réponse à la soumission au troisième rayonnement optique (S3), le premier rayonnement optique (S1) partant du premier produit semi-fini (1) ou, selon le cas, le deuxième rayonnement optique (S2) partant du document de valeur (4) ou, selon le cas, du second produit semi-fini (2).

15. Système capteur selon la revendication 12 ou 13, dans lequel ledit au moins un dispositif de détection (11, 11', 12) présente :
- un premier équipement de rayonnement (11), qui est conçu pour générer un troisième rayonnement optique (S3) et pour soumettre, dans le premier mode de fonctionnement (B1), le premier produit semi-fini (1) au troisième rayonnement optique (S1),
- un second équipement de rayonnement (11'), qui est conçu pour générer un quatrième rayonnement optique (S4), qui est différent du troisième rayonnement optique (S3), et pour soumettre, dans le second mode de fonctionnement (B2), le document de valeur (4) ou, selon le cas, le second produit semi-fini (2) au quatrième rayonnement optique (S4) et
- au moins un équipement de détection (12), qui est conçu pour détecter, en réponse à la soumission au troisième rayonnement optique (S3), le premier rayonnement optique (S1) partant du premier produit semi-fini (1) ou, selon le cas, en réponse à la soumission au quatrième rayonnement optique (S4), le deuxième rayonnement optique (S2) partant du document de valeur (4) ou, selon le cas, du second produit semi-fini (2),
le troisième rayonnement optique (S3) présentant en particulier une intensité plus élevée et/ou un spectre plus large et/ou un nombre plus élevé de composantes spectrales différentes que celle(s)/celui/ceux du quatrième rayonnement optique (S4).
